# EUROPEAN PATENT SPECIFICATION

(11) **EP 4 263 749 B1**
(45) Date of publication and mention of the grant of the patent: **18.06.2025**
(21) Application number: 21823937.4
(22) Date of filing: 13.12.2021
(51) Int. Cl.: C09K 19/34, C09K 19/04, C09K 19/30, C09K 19/12

(54) **DIBENZOFURAN AND DIBENZOTHIOPHENE DERIVATIVES**
DIBENZOFURAN- UND DIBENZOTHIOPHENDERIVATE
DÉRIVÉS DE DIBENZOFURANE ET DE DIBENZOTHIOPHÈNE

(30) Priority: 15.12.2020 EP 20214049
(43) Date of publication of application: 25.10.2023
(73) Proprietor: Merck Patent GmbH, 64293 Darmstadt (DE)
(72) Inventor: BROCKE, Constanze, 64293 DARMSTADT (DE); MANABE, Atsutaka, 64293 DARMSTADT (DE); LAUT, Sven Christian, SHANGHAI, 201206 (CN)
(74) Representative: Merck Patent Association
(86) International application number: PCT/EP2021/085374
(87) International publication number: WO 2022/128847

(56) References cited:
- EP-A1- 2 937 342
- EP-A1- 3 594 208
- CN-A- 111 592 890
- DE-A1- 102005 012 585
- US-A1- 2019 185 753

## Description

The present invention relates to dibenzofuran and dibenzothiophene derivatives, to the use thereof in liquid crystalline media and to liquid crystalline media comprising the dibenzofuran and dibenzothiophene derivatives.

Liquid crystals have found widespread use since the first commercially usable liquid-crystalline compounds were found about 40 years ago. Known areas of application are, in particular, displays for watches and pocket calculators, and large display panels as used in railway stations, airports and sports arenas. Further areas of application are displays of portable computers and navigation systems and video applications. For the last-mentioned applications in particular, high demands are made of the response times and contrast of the images.

The spatial arrangement of the molecules in a liquid crystal has the effect that many of its properties are direction-dependent. Of particular importance for use in liquid-crystal displays are the optical, dielectric and elasto-mechanical anisotropies. Depending on whether the molecules are oriented with their longitudinal axes perpendicular or parallel to the two plates of a capacitor, the latter has a different capacitance; in other words, the dielectric constant ε of the liquid-crystalline medium has different values for the two orientations. Substances whose dielectric constant is larger when the longitudinal axes of the molecules are oriented perpendicular to the capacitor plates than when they are oriented parallel are known as being dielectrically positive. Most liquid crystals used in earlier displays fall into this group.

Both the polarisability of the molecule and the permanent dipole moment play a role for the dielectric anisotropy. On application of a voltage to the display, the longitudinal axis of the molecules orients itself in such a way that the larger of the dielectric constants parallel or perpendicular becomes effective. The strength of the interaction with the electric field depends on the difference between the two constants. In the case of small differences, higher switching voltages are necessary than in the case of large differences. The introduction of suitable polar groups, such as, for example, nitrile groups or fluorine, into the liquid-crystal molecules enables a broad range of working voltages to be achieved.

In the case of the liquid-crystalline molecules used in conventional liquid-crystal displays, the dipole moment oriented along the longitudinal axis of the molecules is larger than the dipole moment oriented perpendicular to the longitudinal axis of the molecules. The orientation of the larger dipole moment along the longitudinal axis of the molecule also determines the orientation of the molecule in a liquid-crystal display in the field-free state. In the most widespread TN ("twisted nematic") cells, a liquid-crystalline layer with a thickness of only from about 5 to 10 µm is arranged between two flat glass plates, onto each of which an electrically conductive, transparent layer of tin oxide or indium tin oxide has been vapour-deposited as electrode. A likewise transparent alignment layer, usually consisting of a polymer (for example polyimides), is located between these films and the liquid-crystalline layer. This alignment layer serves to bring the longitudinal axes of the adjacent crystalline molecules into a preferential direction through surface forces in such a way that, in the voltage-free state, they lie uniformly on the inside of the display surface with the same alignment in a flat manner or with the same small tilt angle. Two additional polarisation films which only enable linear-polarised light to enter and escape are adhesively bonded to the outside of the display in a certain arrangement.

By means of liquid crystals in which the larger dipole moment is oriented parallel to the longitudinal axis of the molecule, very high-performance displays have already been developed. In most cases here, mixtures of from 5 to 20 components are used in order to achieve a sufficiently broad temperature range of the mesophase and short response times and low threshold voltages. However, difficulties are still caused by the strong viewing-angle dependence in liquid-crystal displays as are used, for example, for laptops. The best imaging quality can be achieved if the surface of the display is perpendicular to the viewing direction of the observer. If the display is tilted relative to the observation direction, the imaging quality drops drastically under certain circumstances. For greater comfort, attempts are being made to make the angle through which the display can be tilted from the viewing direction of an observer as large as possible. Attempts have recently been made to improve the viewing-angle dependence using liquid-crystalline compounds whose dipole moment perpendicular to the longitudinal axis of the molecules is larger than that parallel to the longitudinal axis of the molecule. In the field-free state, these molecules are oriented perpendicular to the glass surface of the display. In this way, it has been possible to achieve an improvement in the viewing-angle dependence. Displays of this type are known as VA-TFT ("vertically aligned") displays.

Also known are so-called IPS ("in-plane switching") displays, which contain an LC layer between two substrates with planar orientation, where the two electrodes are arranged on only one of the two substrates and preferably have interdigitated, comb-shaped structures. On application of a voltage to the electrodes an electric field with a significant component parallel to the LC layer is generated between them. This causes realignment of the LC molecules in the layer plane. Furthermore, so-called FFS ("fringe-field switching") displays have been reported (see, inter alia, S.H. Jung et al., Jpn. J. Appl. Phys., Volume 43, No. 3, 2004, 1028), which contain two electrodes on the same substrate, one of which is structured in a comb-shaped manner and the other is unstructured. A strong, so-called "fringe field" is thereby generated, i.e. a strong electric field close to the edge of the electrodes, and, throughout the cell, an electric field which has both a strong vertical component and also a strong horizontal component. FFS displays have a low viewing-angle dependence of the contrast. FFS displays usually contain an LC medium with positive dielectric anisotropy, and an alignment layer, usually of polyimide, which provides planar alignment to the molecules of the LC medium.

For the FFS display it is suggested that not only the large absolute value of Δε is important, but also the components ε(parallel) (ε_{∥}) and ε(perpendicular) (ε_{⊥}) are significant in determining the switching behaviour. It is desirable to achieve a large value for ε(perpendicular), because this improves transmittance of the display. A large transmittance improves contrast and brightness, but may also contribute to energy saving.

In DE 10 2005 012 585 A1, dibenzofuran and dibenzothiophene derivatives are proposed for the use in liquid-crystal media. However, due to their substitution pattern, the compounds described therein exhibit very strong negative dielectric anisotropy which makes them unsuitable for the application according to the present invention.

In the document DE102015004271 further compounds with strongly negative Δε are described, which are composed of a dibenzothiophene and a fluorinated benzene ring connected by a group -CF₂O-, as depicted below.

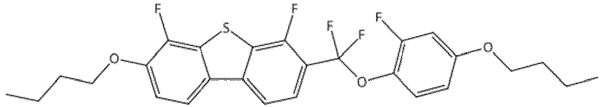

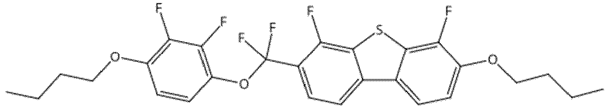

The compounds are hardly suitable for the application according to the present invention mostly due to the different substitution by fluorine atoms.

In CN 111 592 890 A, dibenzothiophene derivatives with a positive dielectric anisotropy of approximately zero are proposed for the use in liquid-crystal media.

Development in the area of liquid-crystalline materials is far from complete. In order to improve the properties of liquid-crystalline display elements, attempts are constantly being made to develop novel compounds which enable such displays to be optimised.

An object of the present invention was to provide more diverse compounds having advantageous properties for use in liquid-crystalline media.

This object is achieved in accordance with the invention by compounds of the general formula I as in claim 1 and defined below 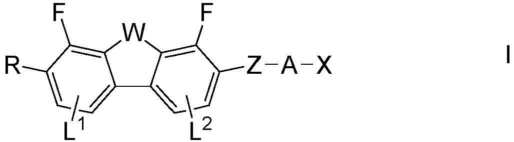 in which
- W: denotes O or S,
- R: denotes H, an alkyl radical having 1 to 15 C atoms, wherein one or more CH₂ groups in these radicals may each be replaced, independently of one another, by -C=C-, -CF₂O-, -OCF₂-, -CH=CH-, 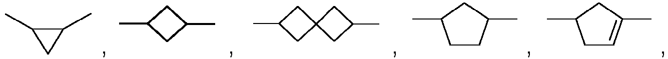 -O-, -CO-O- or -O-CO- in such a way that O atoms are not linked directly to one another, and in which one or more H atoms may be replaced by halogen,
- A: wherein W is O, A denotes a 1,4-phenylene in which one or more H atoms may be replaced by F or CH₃,
wherein W is S, A denotes 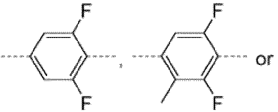 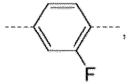
preferably 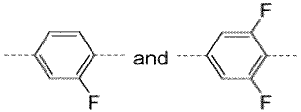
- Z: denotes -CF₂O-, -C(O)O-, -OC(O)-, -CH₂O-
or -OCH₂-,
preferably -CF₂O-, -C(O)O- or -CH₂O-,
- X: denotes F, Cl, CN, NCS, fluorinated alkyl, fluorinated alkoxy, fluorinated alkenyl or fluorinated alkenyloxy each having up to 5 C atoms, preferably F, OCF₃, or OCHF₂, and
- L¹, L²: independently denote H or -CH₃, preferably H.

A further object of the present invention is to provide liquid-crystalline media, in particular for use in TN, IPS or FFS displays.

This object is achieved in accordance with the invention by the provision of compounds of formula I with neutral to positive dielectric anisotropy (Δε).

The compounds of formula I are distinguished by high clearing points and a surprisingly large positive dielectric constant perpendicular to the field director (ε_{⊥}) and are therefore suitable, in particular, for use in TN-TFT displays, and in IPS- and FFS displays. The compounds have a comparatively low melting point and they exhibit very good compatibility with the conventional substances used in liquid-crystal mixtures for displays.

The compounds according to the invention preferably have a Δε in the positive region, preferably Δε > 0.5, more preferably Δε > 1.

### Detailed description

If the group R is an alkyl radical and/or an alkoxy radical, this can be straight-chain or branched. It is preferably straight-chain, has 2, 3, 4, 5, 6 or 7 carbon atoms and accordingly is preferably ethyl, propyl, butyl, pentyl, hexyl, heptyl, ethoxy, propoxy, butoxy, pentoxy, hexoxy or heptoxy, furthermore methyl, octyl, nonyl, decyl, undecyl, dodecyl, tridecyl, tetradecyl, pentadecyl, methoxy, octoxy, nonoxy, decoxy, undecoxy, dodecoxy, tridecoxy or tetradecoxy.

R may each, independently of one another, be an alkenyl radical having from 2 to 15 carbon atoms, which may be straight-chain or branched. It is preferably straight-chain and has from 2 to 7 carbon atoms. Accordingly, it is preferably vinyl, prop-1- or -2-enyl, but-1-, -2- or -3-enyl, pent-1-, -2-, -3- or -4-enyl, hex-1-, -2-, -3-, -4- or -5-enyl, or hept-1-, -2-, -3-, -4-, -5- or -6-enyl.

R may each, independently of one another, be oxaalkyl, preferably straight-chain 2-oxapropyl (= methoxymethyl), 2-oxabutyl (= ethoxymethyl) or 3-oxabutyl (= methoxyethyl), 2-, 3- or 4-oxapentyl, 2-, 3-, 4- or 5-oxahexyl, or 2-, 3-, 4-, 5- or 6-oxaheptyl.

R may each, independently of one another, be an alkyl radical having from 1 to 15 carbon atoms in which one CH₂ group has been replaced by -O- and one has been replaced by -CO-, where these are preferably adjacent. This thus contains an acyloxy group -CO-O- or an oxycarbonyl group -O-CO-. This is preferably straight-chain and has from 2 to 6 carbon atoms.

R may each, independently of one another, be an alkyl radical having from 1 to 15 carbon atoms in which one CH₂ group has been replaced by unsubstituted or substituted -CH=CH- and an adjacent CH₂ group has been replaced by CO or CO-O or O-CO, where this may be straight-chain or branched. It is preferably straight-chain and has from 4 to 13 carbon atoms. R may each, independently of one another, be an alkyl radical having from 1 to 15 carbon atoms or alkenyl radical having from 2 to 15 carbon atoms, each of which is monosubstituted by -CN or -CF₃ and is preferably straight-chain. The substitution by -CN or -CF₃ is possible in any desired position.

R may each, independently of one another, be an alkyl radical in which two or more CH₂ groups have been replaced by -O- and/or -CO-O-, where this may be straight-chain or branched. It is preferably branched and has from 3 to 12 carbon atoms.

R may each, independently of one another, be an alkyl radical having from 1 to 15 carbon atoms or an alkenyl radical having from 2 to 15 carbon atoms, each of which is at least monosubstituted by halogen, where these radicals are preferably straight-chain and halogen is preferably -F or -Cl. In the case of polysubstitution, halogen is preferably -F. The resultant radicals also include perfluorinated radicals, such as -CF₃. In the case of monosubstitution, the fluorine or chlorine substituent can be in any desired position, but is preferably in the ω-position.

The term "fluorinated alkyl radical" preferably encompasses mono- or polyfluorinated radicals. Perfluorinated radicals are included. Particular preference is given to CF₃, CH₂CF₃, CH₂CHF₂, CHF₂, CH₂F, CHFCF₃ and CF₂CHFCF₃.

The term "fluorinated alkoxy radical" preferably encompasses mono- or polyfluorinated radicals. Perfluorinated radicals are included. Particular preference is given to OCF₃.

In a preferred embodiment of the present invention the compounds of formula I are selected from the compounds of the formulae I-1 to I-6: 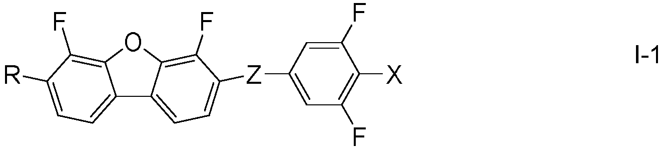 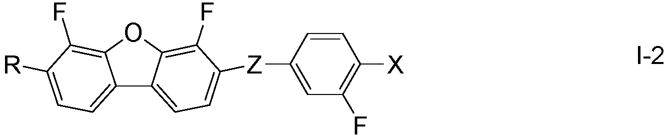 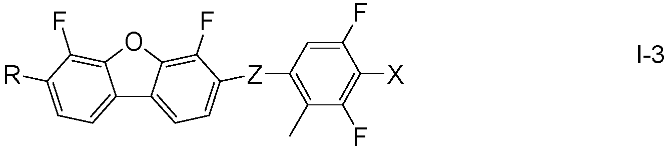 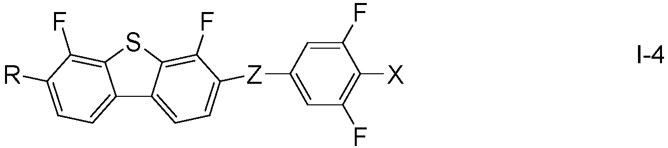 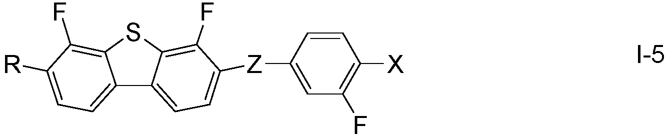 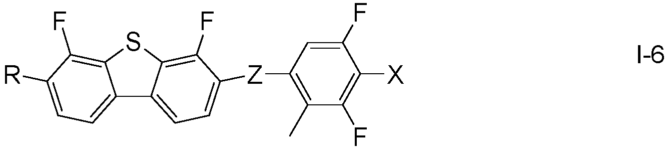 in which the occurring groups have the meanings given above for formula I, and independently:
- R: preferably is an alkyl or alkenyl radical each having up to 7 C atoms, wherein one or more CH₂ groups in these radicals may each be replaced, independently of one another, by 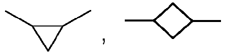 or 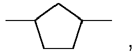
- Z: preferably is -CF₂O- or -OCH₂-, and
- X: preferably is F.

Further, the compounds of formula I are preferably selected from the compounds of the formulae I-A to I-J: 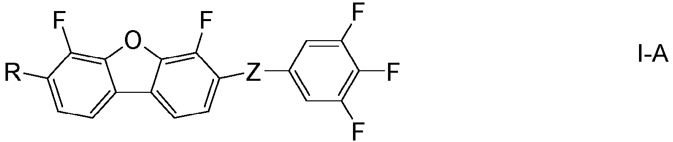 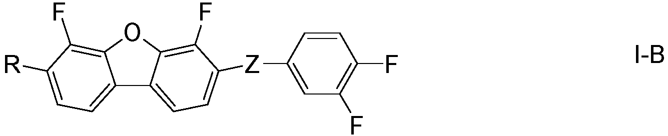 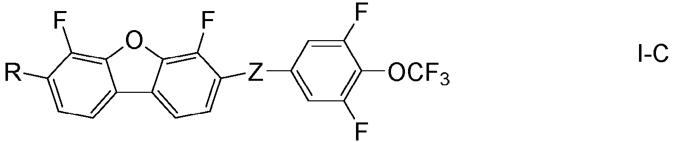 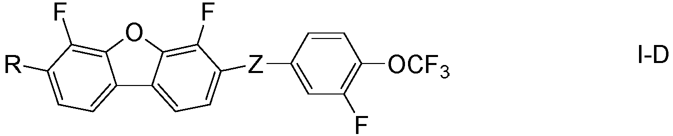 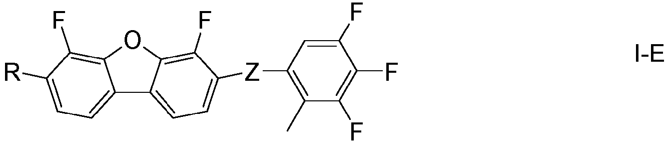 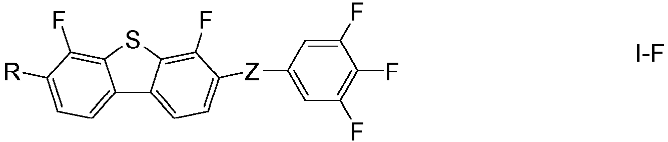 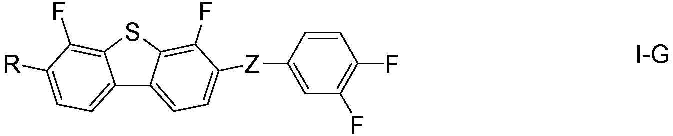 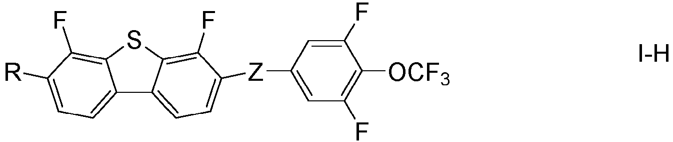 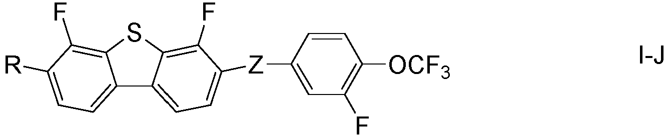 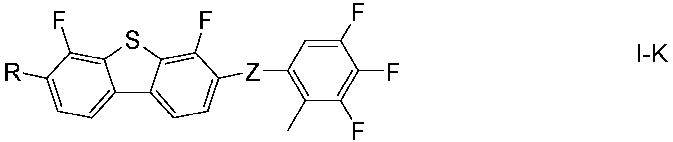 and more preferably from the group of formulae I-A, I-B, I-F and I-G, wherein R and Z are as defined as for formula I above or have any of the preferred definitions made above.

In a preferred embodiment of the present invention, in the formula I and its sub-formulae, R denotes alkyl having 1 to 7 C atoms, in particular ethyl, propyl, buty, pentyl, cyclopropyl, cyclopropylmethyl, cyclobutyl, cyclobutylmethyl, cyclopentyl, cyclopentylmethyl or 3-methylcyclopentyl-methyl, where n-propyl, n-butyl and n-pentyl are most preferred.

In a more preferred embodiment of the present invention, in the formula I and the dependent structures Z denotes a group -CF₂O-.

The substituents L¹ and L² are preferably both H or one of L¹ and L² is H and the other is methyl.

The structure I is preferably any of the following structures:

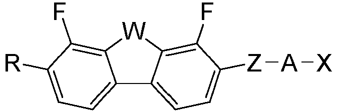

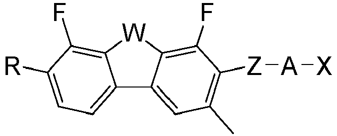

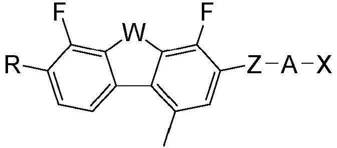

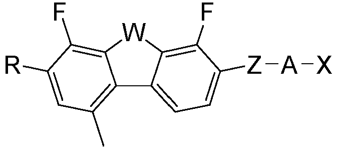

Most preferably both of L¹ and L² are H.

The compounds of the general formula I are prepared by methods known per se, as described in the literature (for example in the standard works, such as Houben-Weyl, Methoden der organischen Chemie [Methods of Organic Chemistry], Georg-Thieme-Verlag, Stuttgart), to be precise under reaction conditions which are known and are suitable for the said reactions. Use can be made here of variants which are known per se, but are not mentioned here in greater detail.

If desired, the starting materials can also be formed in situ by not isolating them from the reaction mixture, but instead immediately converting them further into the compounds of the general formula I.

Preferred synthetic pathways towards compounds according to the invention are shown in the schemes below and are further illustrated by means of the working examples. The syntheses can be adapted to the particular desired compounds of the general formula I by choice of suitable starting materials.

The dibenzofuran derivatives, i.e. the compounds of formula I wherein W denotes O (formula I') are preferably synthesized as shown in Scheme 1 and are obtainable by intramolecular substitution of fluorine by nucleophilic attack of a phenolate by treatment of the phenol P with a base.

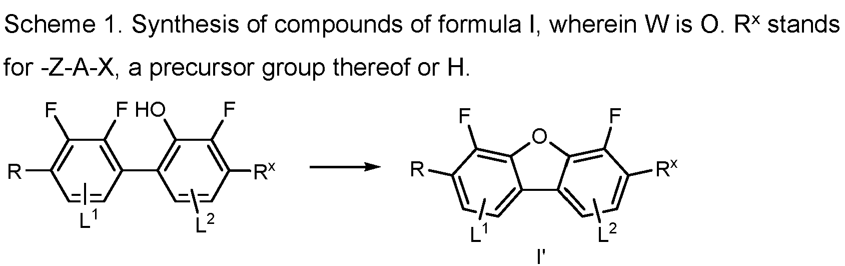

Alternatively, the analogous ring closure where the position of the OH group and the fluorine atom are interchanged, is possible as shown in scheme 2.

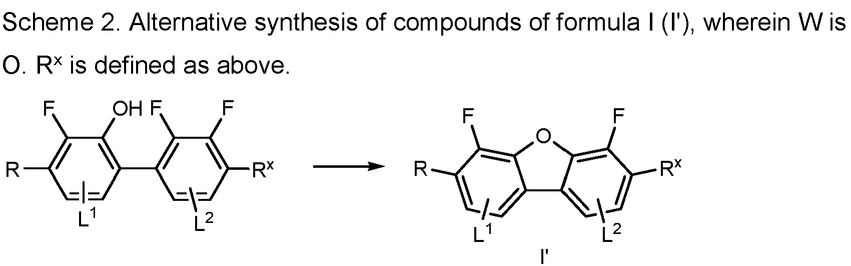

The dibenzothiophene derivatives, i.e. the compounds of formula I wherein W denotes S (formula I‴) are preferably synthesized as shown in scheme 3.

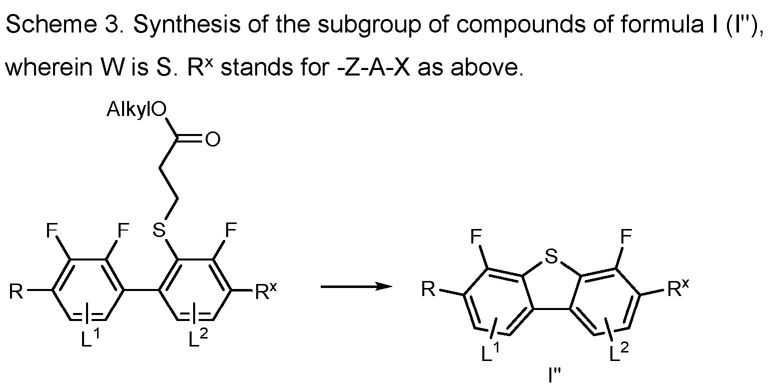

The starting material in Scheme 3 is obtainable from the phenols in Scheme 1 via the corresponding triflate according to Itoh, Takahiro and Mase, Toshiaki, Organic Letters, 6(24), 4587-4590; 2004. Treatment of the compounds with a strong, non-nucleophilic base, preferably potassium tert.-butanoate yields compounds of formula I" (cf. Jepsen, Tue Heesgaard et al., European Journal of Organic Chemistry, (1), 53-57, S53/1-S53/65; 2011).

The group R^{x} is preferably built into the final substituent -Z-A-X after the formation of the dibenzofuran or dibenzothiophen ring. This is accomplished by known reactions established for the chemistry of each of the groups involved. In the case R^{x} is a hadrogen, the position can be functionalized by deprotonation and addition to an electrophile. Details are provided in the examples.

The reactions described should only be regarded as illustrative. The person skilled in the art can carry out corresponding variations of the syntheses described and also follow other suitable synthetic routes in order to obtain compounds of the formula I.

The compounds of the general formula I can be used in liquid-crystalline media. The present invention therefore also relates to a liquid-crystalline medium comprising two or more liquid-crystalline compounds, comprising one or more compounds of the general formula I.

The present invention also relates to liquid-crystalline media comprising 2 to 40, preferably 4 to 30, components as further constituents besides one or more compounds of the formula I according to the invention. These media particularly preferably comprise 7 to 25 components besides one or more compounds according to the invention.

The media according to the invention preferably comprise 1 to 20%, particularly preferably 2 to 10%, of the compounds of the formula I according to the invention.

The media preferably comprise one, two, three, four or five compounds of the formula I according to the invention.

In a preferred embodiment of the present invention the liquid-crystalline medium comprises
a) one or more compounds selected from the group of compounds of formulae II and **III,** preferably having a dielectric anisotropy of greater than 3: 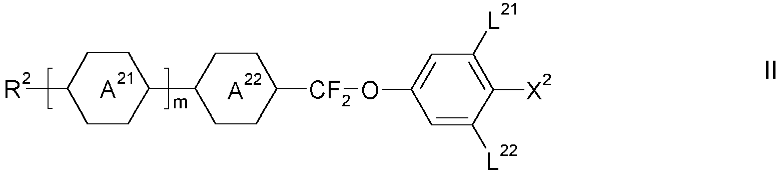 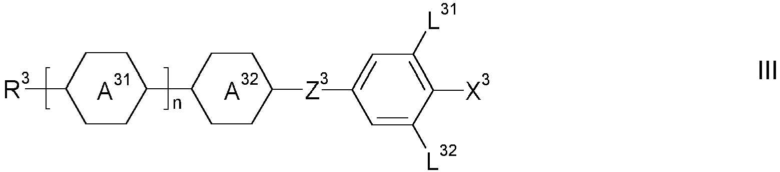 in which
   - R²: denotes alkyl, alkoxy, fluorinated alkyl or fluorinated alkoxy having 1 to 7 C atoms, alkenyl, alkenyloxy, alkoxyalkyl or fluorinated alkenyl having 2 to 7 C atoms and preferably alkyl or alkenyl, wherein one or more CH₂ groups in these radicals may each be replaced, independently of one another, by 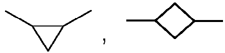 or 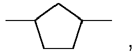 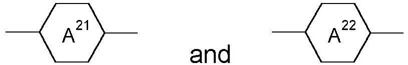 on each appearance, independently of one another, denote 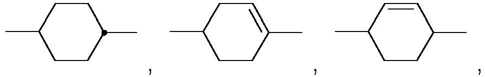 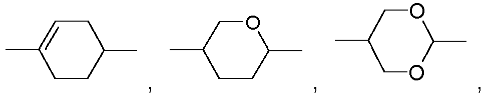 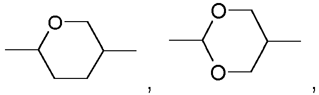 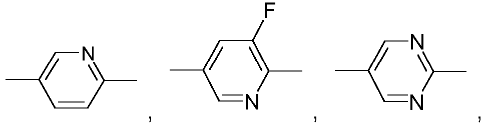 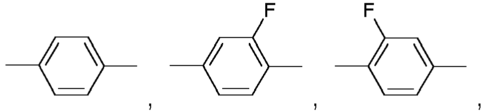 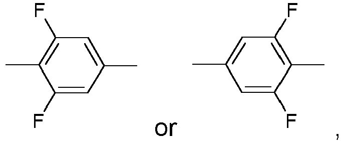 preferably 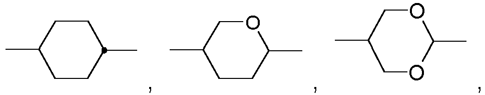 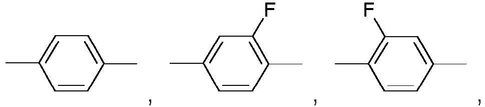 or 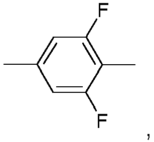
   - L²¹ and L²²: denote H or F, preferably L²¹ denotes F,
   - X²: denotes halogen, halogenated alkyl or alkoxy having 1 to 3 C atoms or halogenated alkenyl or alkenyloxy having 2 or 3 C atoms, preferably F, Cl, -OCF₃, -O-CH₂CF₃, -O-CH=CF₂ or -CF₃, very preferably F, Cl, -O-CH=CF₂ or - OCF₃,
   - m: is 0, 1, 2 or 3, preferably 1 or 2 and particularly preferably 1,
   - R³: denotes alkyl, alkoxy, fluorinated alkyl or fluorinated alkoxy having 1 to 7 C atoms, alkenyl, alkenyloxy, alkoxyalkyl or fluorinated alkenyl having 2 to 7 C atoms and preferably alkyl or alkenyl, wherein one or more CH₂ groups in these radicals may each be replaced, independently of one another, by 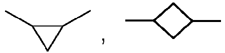 or 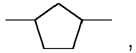 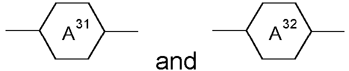 on each appearance, independently of one another, are 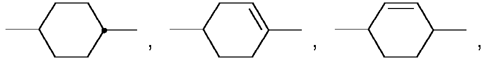 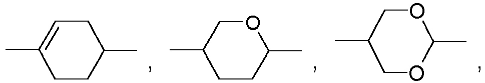 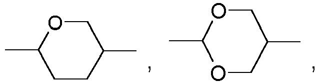 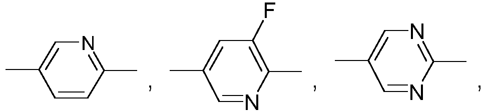 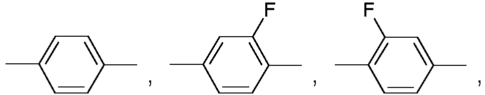 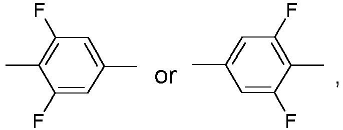 preferably 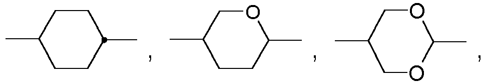 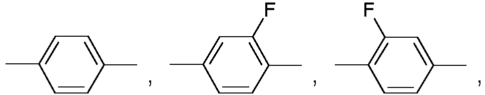 or 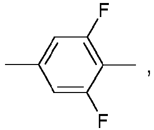
   - L³¹ and L³²,: independently of one another, denote H or F, preferably L³¹ denotes F,
   - X³: denotes halogen, halogenated alkyl or alkoxy having 1 to 3 C atoms or halogenated alkenyl or alkenyloxy having 2 or 3 C atoms, preferably F, Cl, -OCF₃, -OCHF₂, -O-CH₂CF₃, -O-CH=CF₂, -O-CH=CH₂ or -CF₃, very preferably F, Cl, -O-CH=CF₂, -OCHF₂ or -OCF₃,
   - Z³: denotes -CH₂CH₂-, -CF₂CF₂-, -COO-, *trans*-CH=CH-, trans-CF=CF-, -CH₂O- or a single bond, preferably -CH₂CH₂-, -COO-, *trans*-CH=CH- or a single bond and very preferably -COO-, *trans*-CH=CH- or a single bond, and
   - n: is 0, 1, 2 or 3, preferably 1, 2 or 3 and particularly preferably 1, and
b) optionally one or more, preferably dielectrically neutral, compounds selected from the group of formulae IV and V: 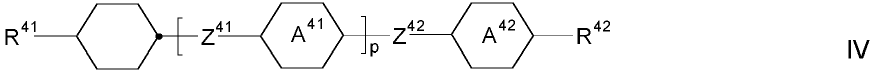 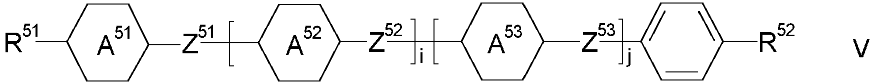 in which
   - R⁴¹ and R⁴²,: independently of one another, have the meaning indicated above for R² under formula II, preferably R⁴¹ denotes alkyl and R⁴² denotes alkyl or alkoxy or R⁴¹ denotes alkenyl and R⁴² denotes alkyl, 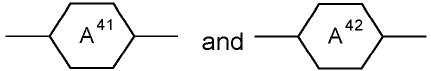 independently of one another and, if 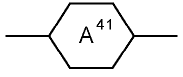 - occurs twice, also these independently of one another, denote 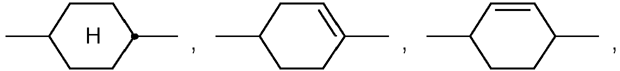 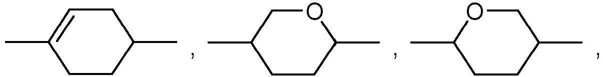 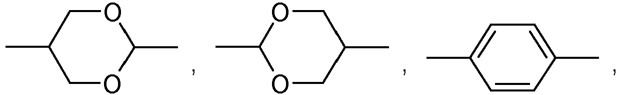 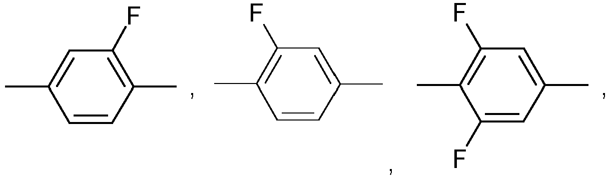 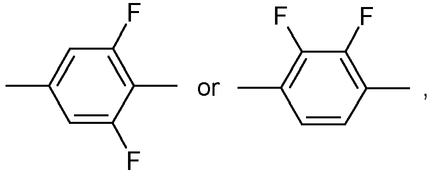 preferably one or more of 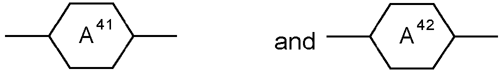 denote, 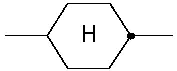
   - Z⁴¹ and Z⁴²,: independently of one another and, if Z⁴¹ occurs twice, also these independently of one another,
   denote -CH₂CH₂-, -COO-, *trans*-CH=CH-, *trans-*CF=CF-, -CH₂O-, -CF₂O-, -C=C- or a single bond, preferably one or more thereof denotes a single bond,
   - p: denotes 0, 1 or 2, preferably 0 or 1,
   - R⁵¹ and R⁵²,: independently of one another, have one of the meanings given for R⁴¹ and R⁴² and preferably denote alkyl having 1 to 7 C atoms, preferably n-alkyl, particularly preferably n-alkyl having 1 to 5 C atoms, alkoxy having 1 to 7 C atoms, preferably n-alkoxy, particularly preferably n-alkoxy having 2 to 5 C atoms, alkoxyalkyl, alkenyl or alkenyloxy having 2 to 7 C atoms, preferably having 2 to 4 C atoms, preferably alkenyloxy, 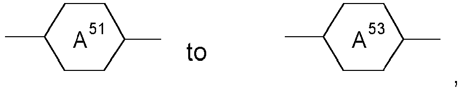 if present, each, independently of one another, denote 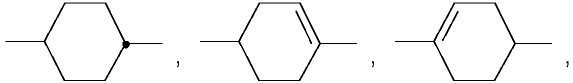 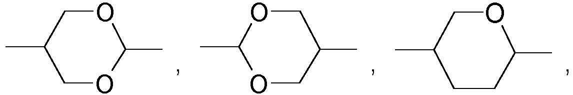 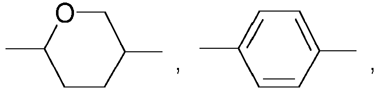 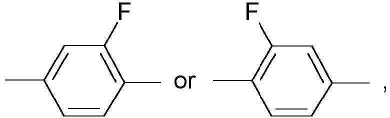 preferably 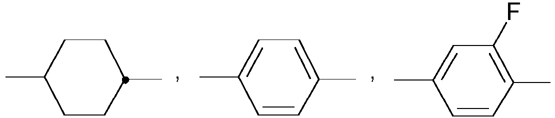 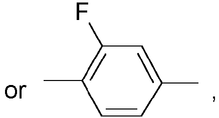
   preferably 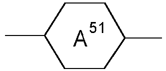 denotes 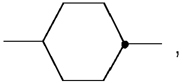 and, if present, 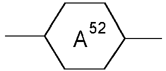 preferably denotes 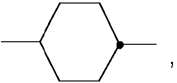
   - Z⁵¹ to Z⁵³: each, independently of one another, denote -CH₂-CH₂-, -CH₂-O-, -CH=CH-, -C=C-, -COO- or a single bond, preferably -CH₂-CH₂-, -CH₂-O- or a single bond and particularly preferably a single bond,
   - i and j: each, independently of one another, denote 0 or 1, and
   - (i + j): preferably is 0, 1 or 2, more preferably 0 or 1 and, most preferably, 1.
   In a preferred embodiment of the present invention the liquid-crystalline medium additionally comprises
c) one or more compounds selected from the compounds of the formulae Y 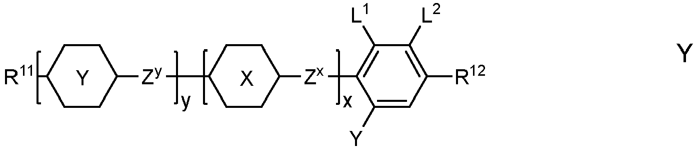 in which the individual radicals, on each occurrence identically or differently, have the following meaning: 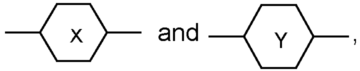 independently of one another, 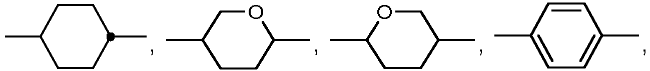 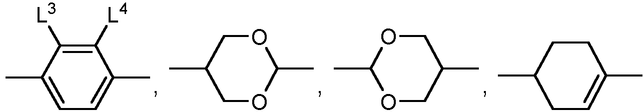 or 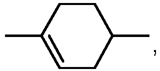
   - R¹¹, R¹²: identically or differently, a straight-chain or branched alkyl or alkoxy radical that is unsubstituted or halogenated and has 1 to 15 C atoms, where one or more CH₂ groups in these radicals may each be replaced, independently of one another, by 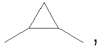 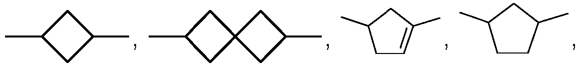 preferably 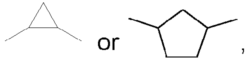 or by -C≡C-, -CF₂O-, -CH=CH-, -O-, -COO- or -O-CO- in such a way that O atoms are not linked directly to one another, and R¹² alternatively denotes F,
   - Z^{x}, Z^{y}: -CH₂CH₂-, -CH=CH-, -CF₂O-, -OCF₂-, -CH₂O-, -OCH₂-, -CO-O-, -O-CO-, -C₂F₄-, -CF=CF-, -CH=CH-CH₂O-, or a single bond, preferably a single bond,
   - L¹, L²,: For Cl, preferably F,
   - L³, L⁴: H, F, Cl or CH₃, preferably H or F,
   - Y: denotes H, F, Cl, CF₃, CHF₂ or CH₃, preferably H or CH₃, particularly preferably H, and
   - x, y: 0, 1 or 2, with x+y ≤3.

The combination of compounds of formula I with compounds of formula II and/or III, and additionally with compounds selected from formulae Y or their sub-formulae, leads to liquid-crystalline media which show a moderately positive dielectric anisotropy and at the same time an increased dielectric constant ε_{⊥} perpendicular to the longitudinal axes of the liquid-crystalline molecules, while maintaining a low rotational viscosity and a low value of the ratio γ₁/K₁₁. This enables liquid-crystalline displays, especially of the HB-FFS, FFS and IPS mode, with high brightness and transmission and low response times.

The invention furthermore relates to a process for the preparation of a liquid-crystalline medium according to the invention by mixing one or more compounds of formula I or their preferred subformulae with one or more low-molecular-weight liquid-crystalline compounds, or a liquid-crystal mixture and optionally with further liquid-crystalline compounds and/or additives.

The present invention also relates to electro-optical liquid-crystal display elements containing a liquid-crystalline medium according to the invention.

The media according to the invention are prepared in a manner conventional per se. In general, the components are dissolved in one another, advantageously at elevated temperature. By means of suitable additives, the liquid-crystalline phases of the present invention can be modified in such a way that they can be used in all types of liquid-crystal display elements that have been disclosed hitherto. Additives of this type are known to the person skilled in the art and are described in detail in the literature (H. Kelker/R. Hatz, Handbook of Liquid Crystals, Verlag Chemie, Weinheim, 1980). For example, pleochroic dyes can be used for the preparation of coloured guest-host systems or substances can be added in order to modify the dielectric anisotropy, the viscosity and/or the alignment of the nematic phases.

For the present invention and in the following examples, the structures of the liquid-crystal compounds are indicated by means of acronyms, with the transformation into chemical formulae taking place in accordance with

Tables A to C below. All radicals CₙH₂ₙ₊₁, CₘH₂ₘ₊₁ and CₗH₂ₗ₊₁ or CₙH₂ₙ, CₘH₂ₘ and CₗH₂, are straight-chain alkyl radicals or alkylene radicals, in each case having n, m and I C atoms respectively. Preferably n, m and I are independently of each other 1, 2, 3, 4, 5, 6, or 7. Table A shows the codes for the ring elements of the nuclei of the compound, Table B lists the bridging units, and Table C lists the meanings of the symbols for the left- and right-hand end groups of the molecules. The acronyms are composed of the codes for the ring elements with optional linking groups, followed by a first hyphen and the codes for the left-hand end group, and a second hyphen and the codes for the right-hand end group. Table D shows illustrative structures of compounds together with their respective abbreviations.

**Table A: Ring elements**

| | | | |
|---|---|---|---|
| **C** | 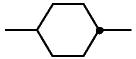 | | |
| **D** | 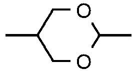 | **DI** | 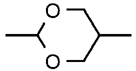 |
| **A** | 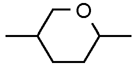 | **Al** | 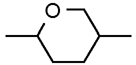 |
| **P** | 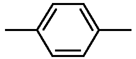 | | |
| **G** | 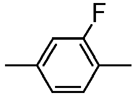 | **GI** | 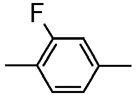 |
| **U** | 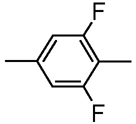 | **UI** | 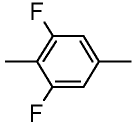 |
| **Y** | 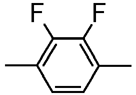 | **U(Me)** | 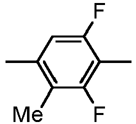 |
| **P(F, Cl)Y** | 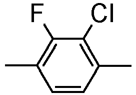 | **P(Cl,F)Y** | 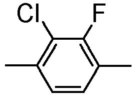 |
| **np** | 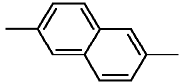 | | |
| **n3f** | 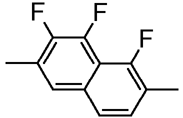 | **nN3fl** | 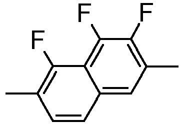 |
| **th** | 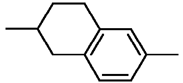 | **thl** | 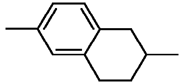 |
| **tH2f** | 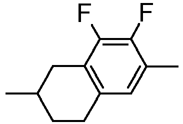 | **tH2fl** | 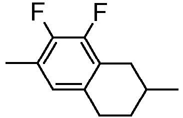 |
| **o2f** | 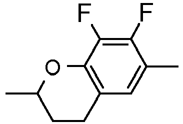 | **o2fl** | 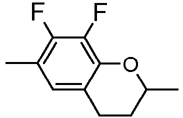 |
| **dh** | 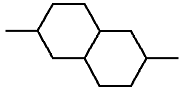 | | |
| **B** | 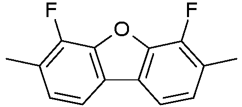 | **B(S)** | 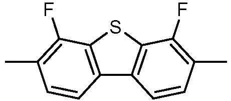 |
| **O** | 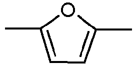 | **S** | 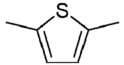 |
| **K** | 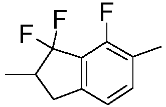 | **KI** | 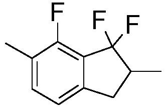 |
| **L** | 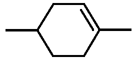 | **LI** | 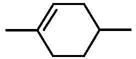 |
| **F** | 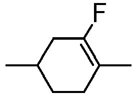 | **FI** | 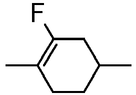 |

**Table B: Bridging units**

| | | | |
|---|---|---|---|
| **E** | -CH₂-CH₂- | | |
| **V** | -CH=CH- | | |
| **T** | -C≡C- | | |
| **W** | -CF₂-CF₂- | | |
| **B** | -CF=CF- | | |
| **Z** | -CO-O- | **ZI** | -O-CO- |
| **X** | -CF=CH- | **XI** | -CH=CF- |
| **O** | -CH₂-O- | **OI** | -O-CH₂- |
| **Q** | -CF₂-O- | **QI** | -O-CF₂- |

**Table C: End groups**

| **On the left individually or in combination** | | **On the right individually or in combination** | |
|---|---|---|---|
| **-n-** | CₙH₂ₙ₊₁- | **-n** | -CₙH₂ₙ₊₁ |
| **-nO-** | CₙH₂ₙ₊₁-O- | **-On** | -O-CₙH₂ₙ₊₁ |
| **-V-** | CH₂=CH- | **-V** | -CH=CH₂ |
| **-nV-** | CₙH₂ₙ₊₁-CH=CH- | **-nV** | -CₙH2ₙ-CH=CH₂ |
| **-Vn-** | CH₂=CH- CₙH₂ₙ- | **-Vn** | -CH=CH-CₙH₂ₙ₊₁ |
| **-nVm-** | CₙH₂ₙ₊₁-CH=CH-CₘH₂ₘ- | **-nVm** | - CₙH₂ₙ-CH=CH-CₘH₂ₘ₊₁ |
| **-N-** | N≡C- | **-N** | -C≡N |
| **-S-** | S=C=N- | **-S** | -N=C=S |
| **-F-** | F- | **-F** | -F |
| **-Cl-** | Cl- | **-Cl** | -Cl |
| **-M-** | CFH₂- | **-M** | -CFH₂ |
| **-D-** | CF₂H- | **-D** | -CF₂H |
| **-T-** | CF₃- | **-T** | -CF₃ |
| **-MO-** | CFH₂O - | **-OM** | -OCFH₂ |
| **-DO-** | CF₂HO - | **-OD** | -OCF₂H |
| **-TO-** | CF₃O - | **-OT** | -OCF₃ |
| **-A-** | H-C≡C- | **-A** | -C≡C-H |
| **-nA-** | CₙH₂ₙ₊₁-C=C- | **-An** | -C≡C-CₙH₂ₙ₊₁ |
| **-NA-** | N≡C-C≡C- | **-AN** | -C≡C-C≡N |

| **On the left only in combination** | | **On the right only in combination** | |
|---|---|---|---|
| **-...n...-** | -CₙH₂ₙ- | **-...n...** | -CₙH₂ₙ- |
| **-...M...-** | -CFH- | **-...M...** | -CFH- |
| **-...D...-** | -CF₂- | **-...D...** | -CF₂- |
| **-...V...-** | -CH=CH- | **-...V...** | -CH=CH- |
| **-...Z...-** | -CO-O- | **-...Z...** | -CO-O- |
| **-...ZI...-** | -O-CO- | **-...ZI...** | -O-CO- |
| **-...K...-** | -CO- | **-...K...** | -CO- |
| **-...W...-** | -CF=CF- | **-...W...** | -CF=CF- |

in which n and m are each integers, and the three dots "..." are placeholders for other abbreviations from this table.

In addition to the compounds of formula I, the mixtures according to the invention preferably comprise one or more compounds of the compounds shown in Table D below.

Within the acronyms above and below n, m, k and I are, independently of one another, each an integer, preferably 1 to 9 preferably 1 to 7, k and I possibly may be also 0 and preferably are 0 to 4, more preferably 0 or 2 and most preferably 2, n preferably is 1, 2, 3, 4 or 5, in the combination "-nO-" it preferably is 1, 2, 3 or 4, preferably 2 or 4, m preferably is 1, 2, 3, 4 or 5, in the combination "-Om" it preferably is 1, 2, 3 or 4, more preferably 2 or 4. The combination "-IVm" preferably is "2V1".

**Table D**

| Exemplary, preferred dielectrically positive compounds that can be used in combination with compounds of formula I |
|---|
| 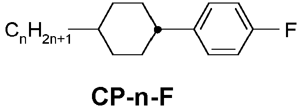 |
| 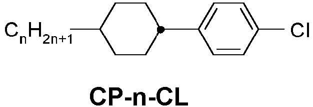 |
| 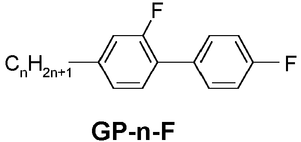 |
| 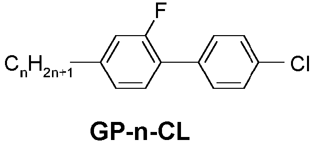 |
| 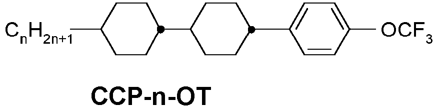 |
| 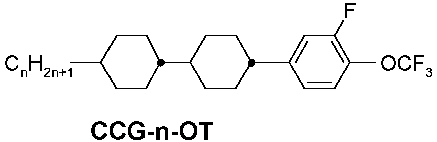 |
| 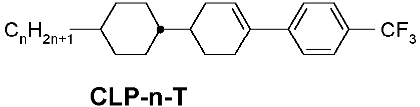 |
| 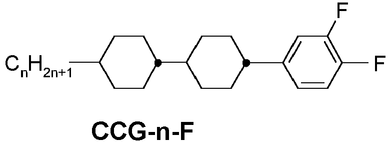 |
| 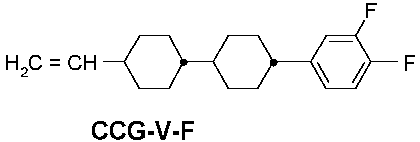 |
| 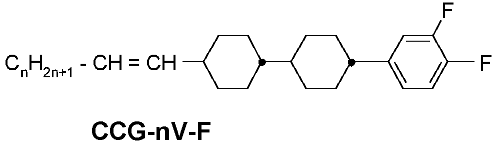 |
| 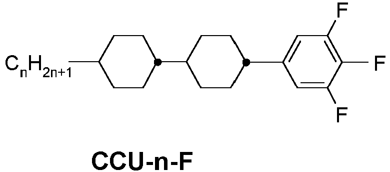 |
| 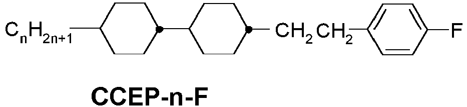 |
| 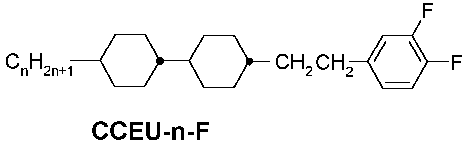 |
| 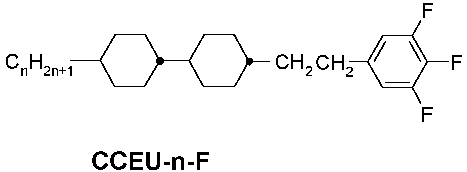 |
| 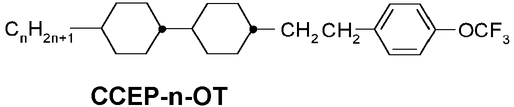 |
| 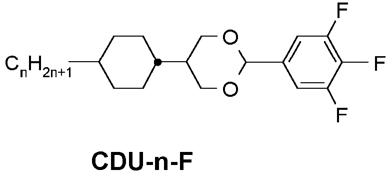 |
| 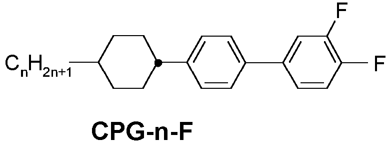 |
| 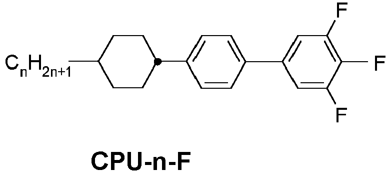 |
| 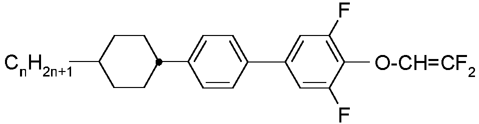 |
| 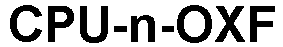 |
| 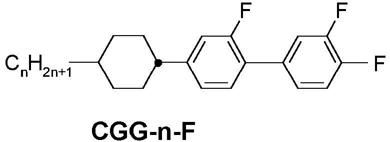 |
| 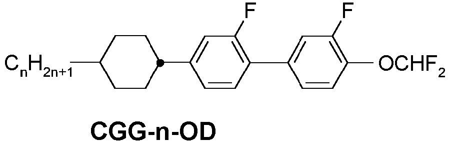 |
| 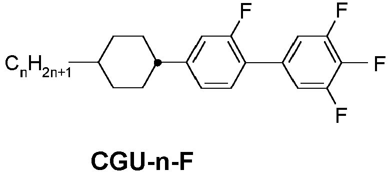 |
| 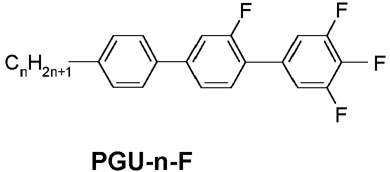 |
| 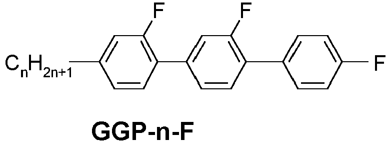 |
| 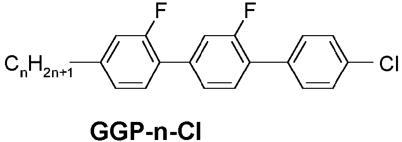 |
| 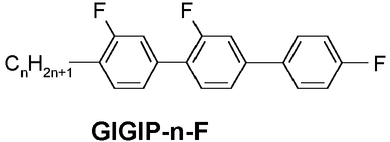 |
| 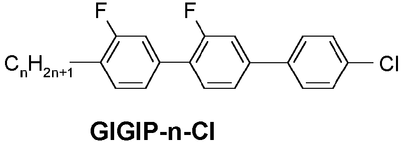 |
| 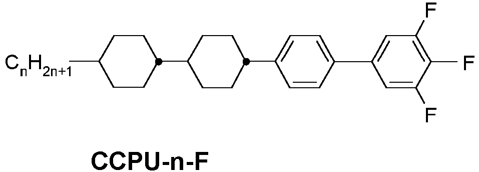 |
| 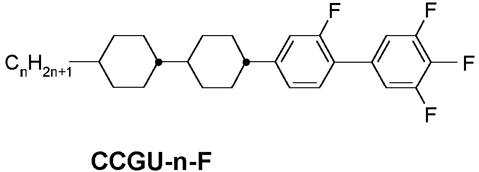 |
| 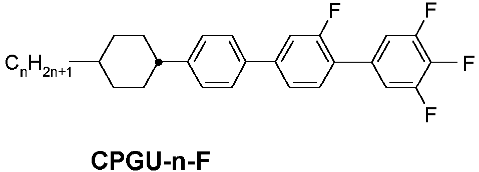 |
| 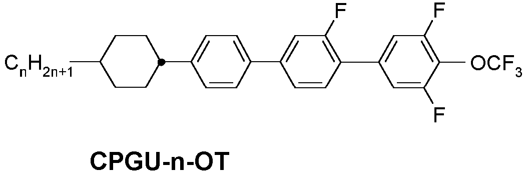 |
| 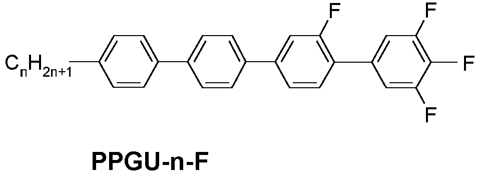 |
| 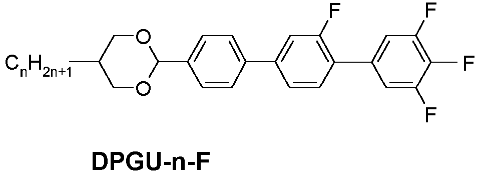 |
| 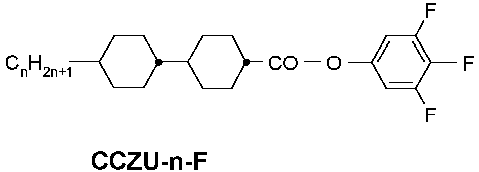 |
| 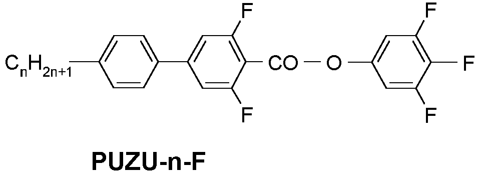 |
| 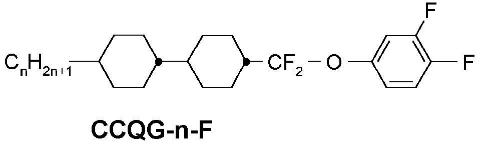 |
| 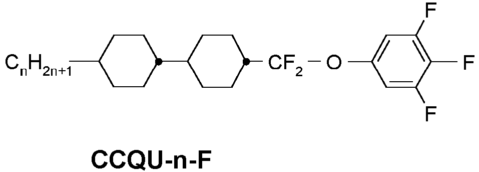 |
| 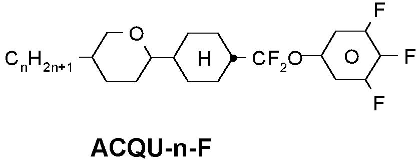 |
| 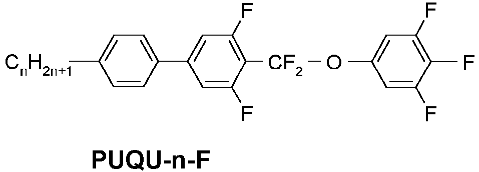 |
| 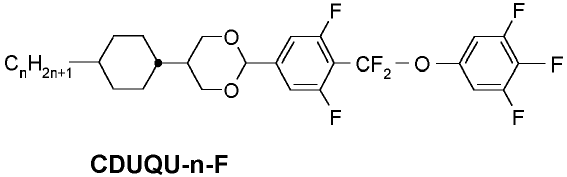 |
| 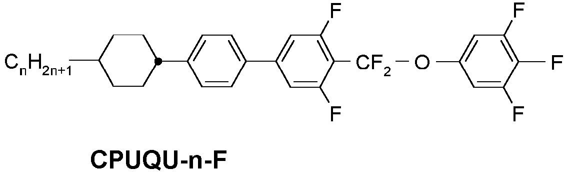 |
| 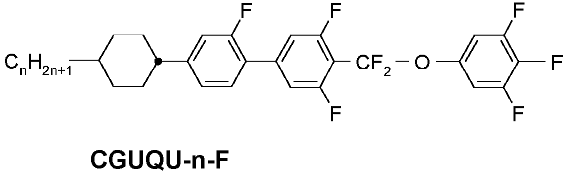 |
| 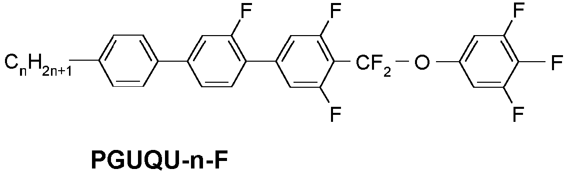 |
| 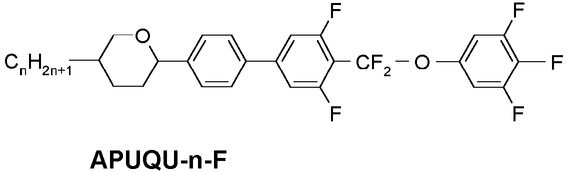 |
| 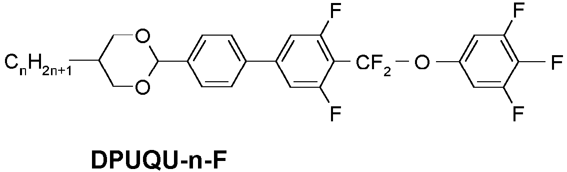 |
| 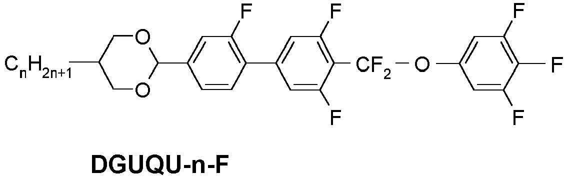 |
| 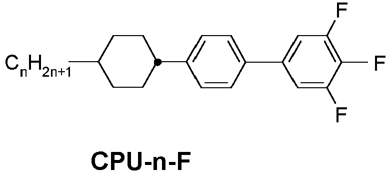 |
| 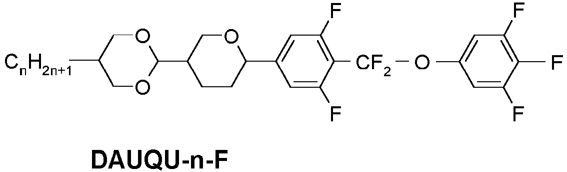 |
| 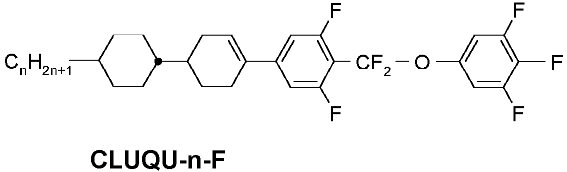 |
| 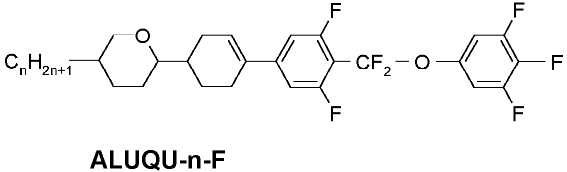 |
| 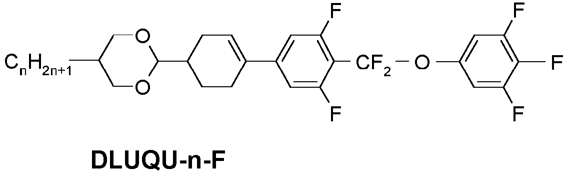 |
| 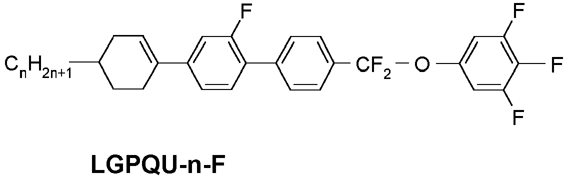 |

Exemplary, preferred dielectrically neutral compounds that can be used in combination with compounds of formula I:

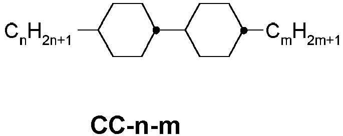

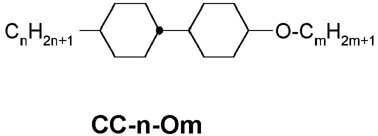

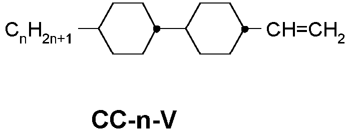

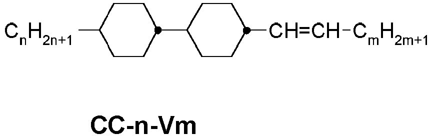

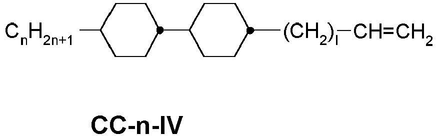

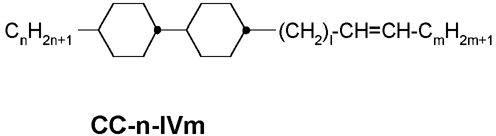

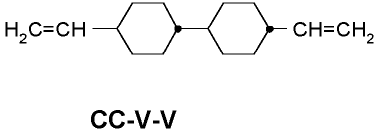

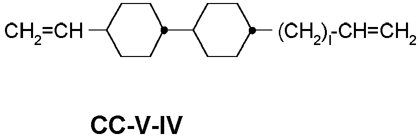

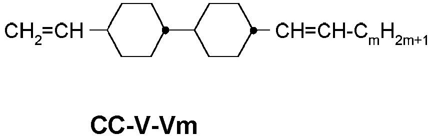

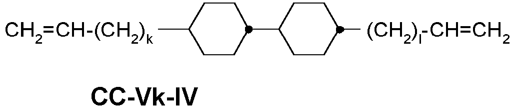

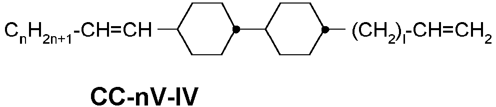

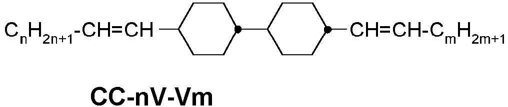

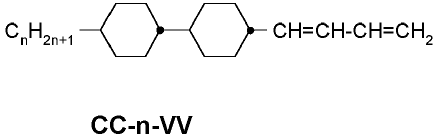

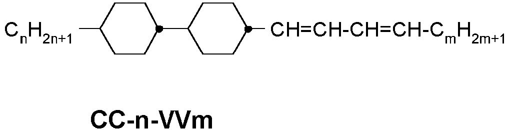

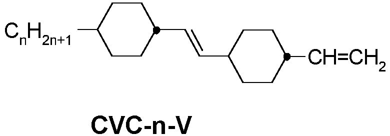

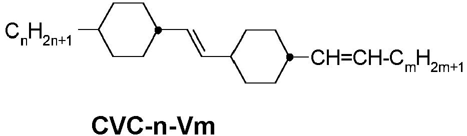

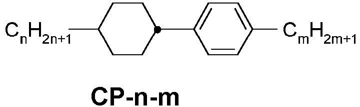

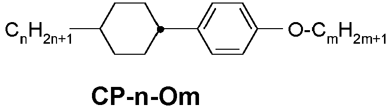

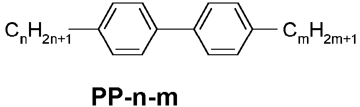

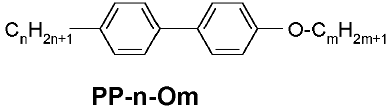

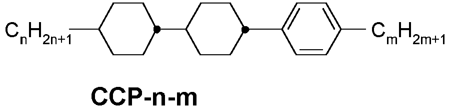

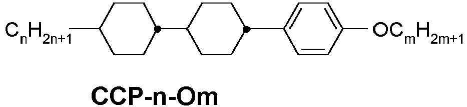

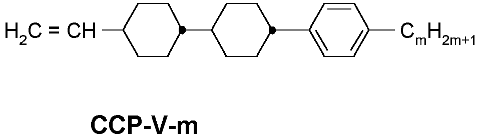

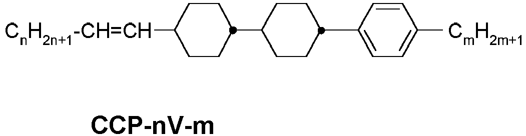

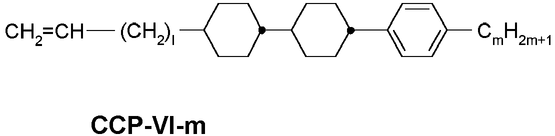

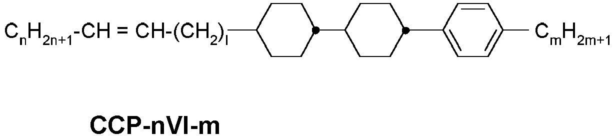

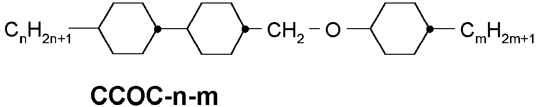

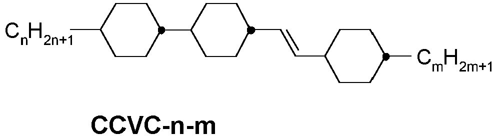

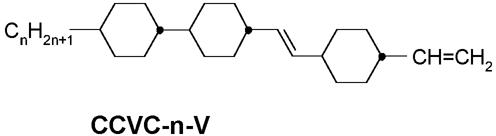

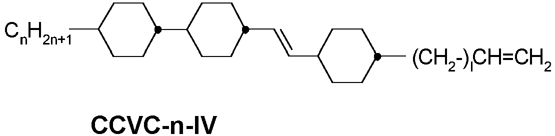

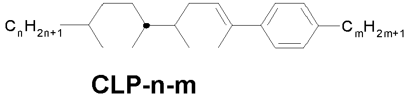

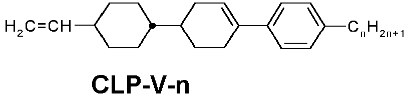

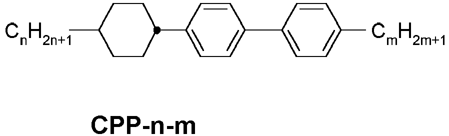

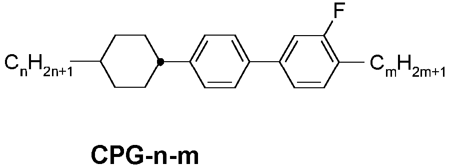

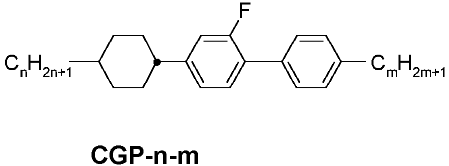

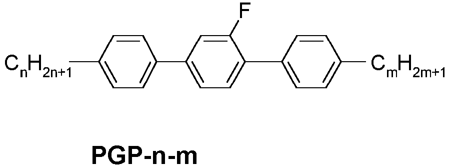

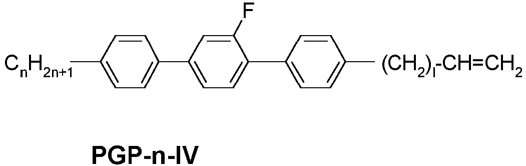

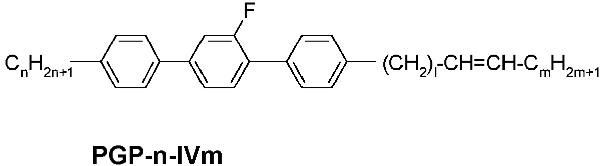

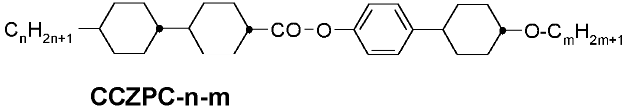

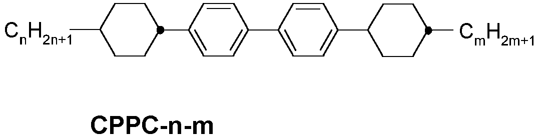

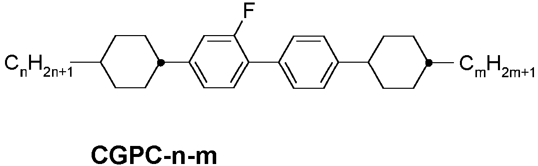

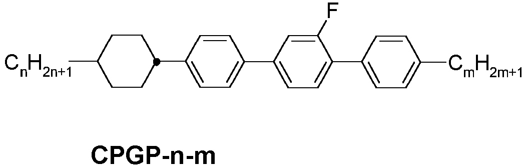

Exemplary dielectrically negative compounds that can be used in combination with compounds of formula I:

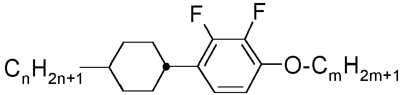

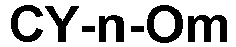

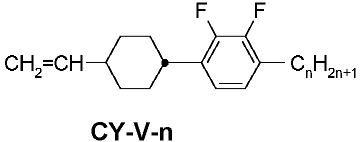

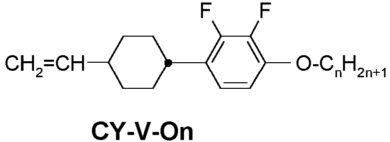

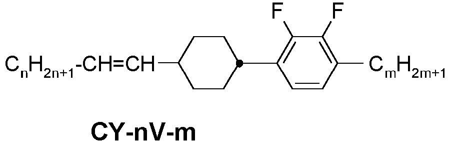

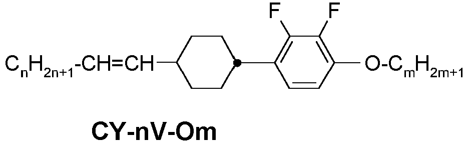

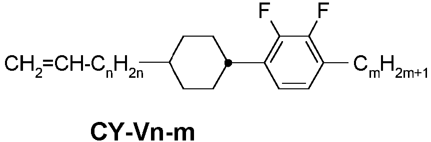

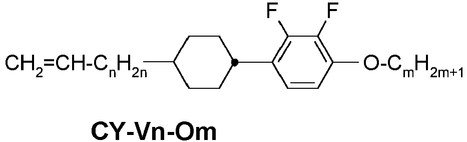

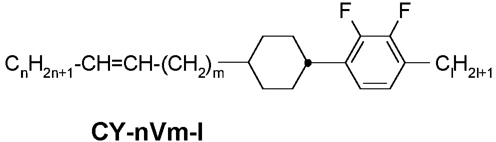

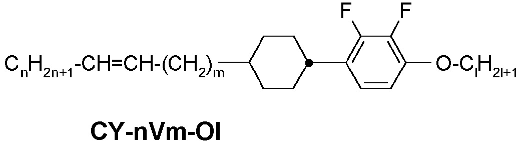

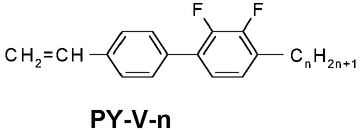

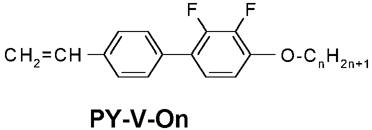

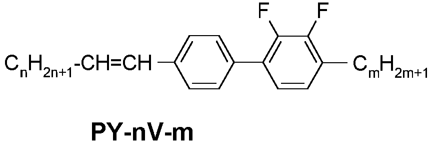

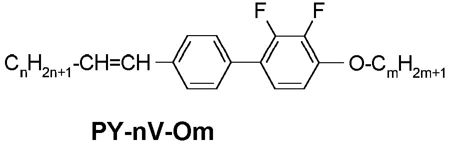

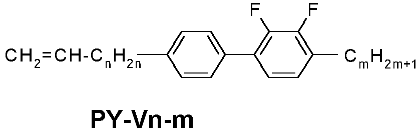

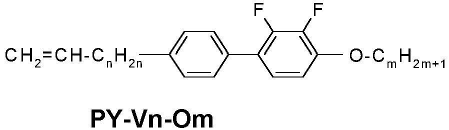

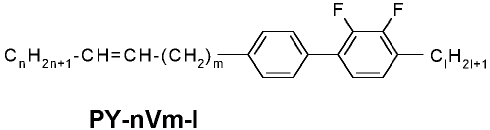

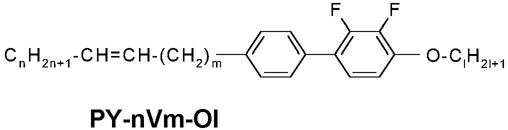

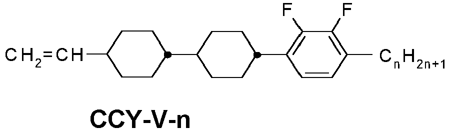

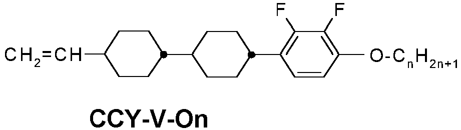

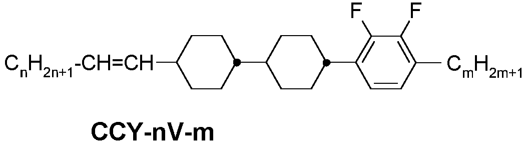

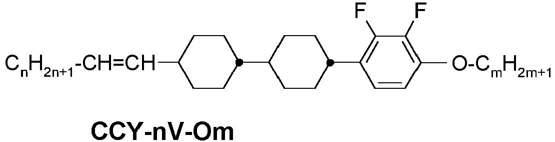

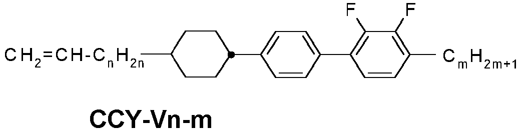

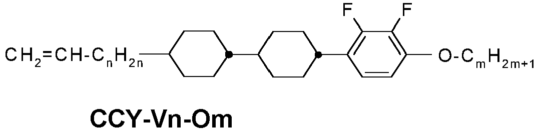

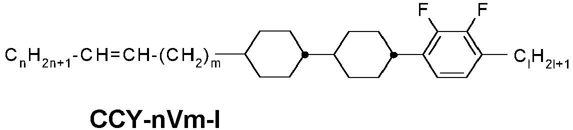

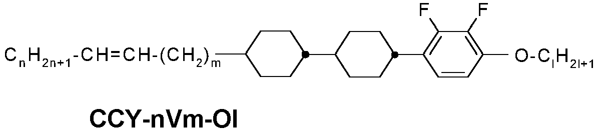

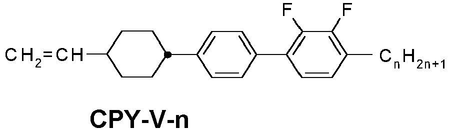

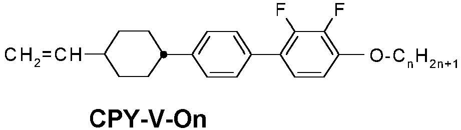

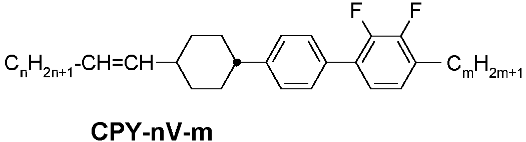

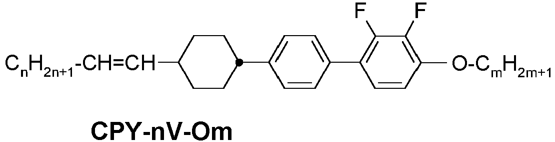

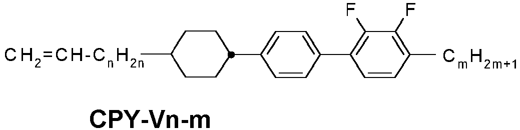

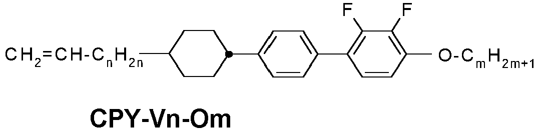

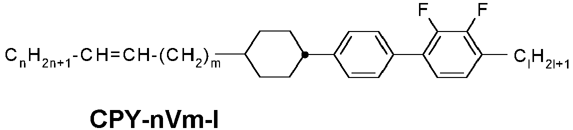

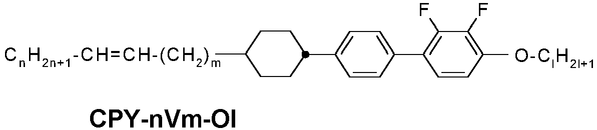

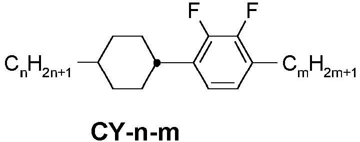

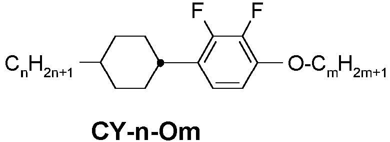

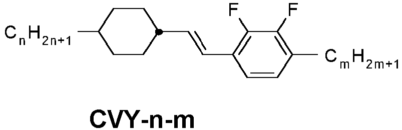

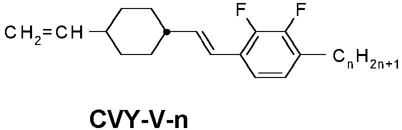

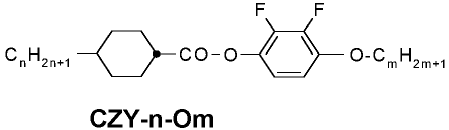

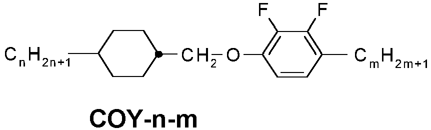

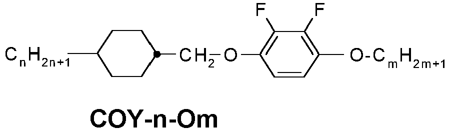

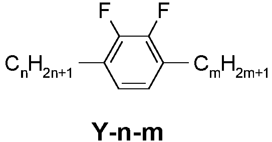

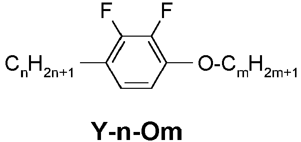

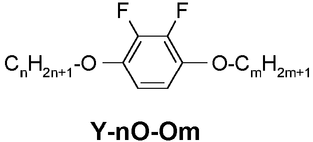

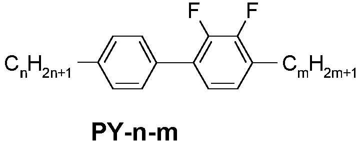

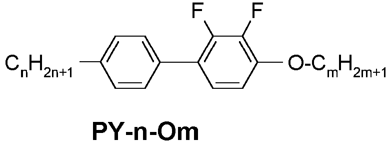

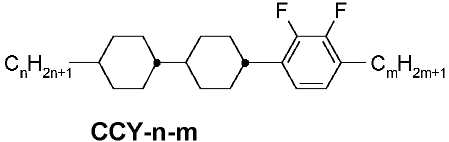

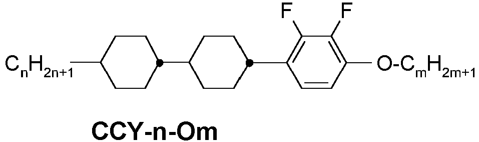

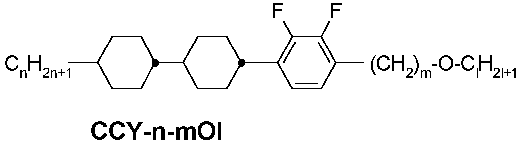

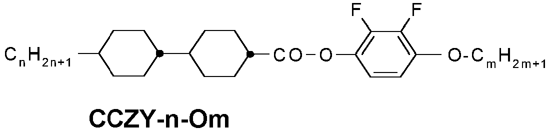

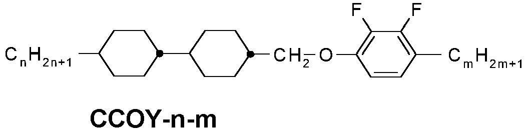

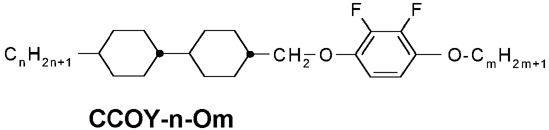

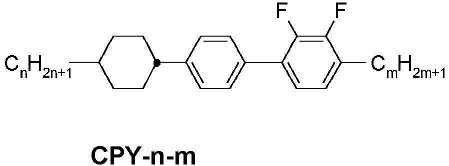

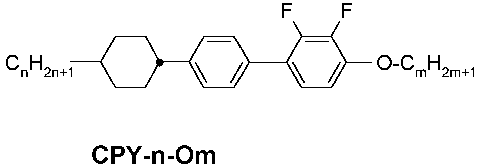

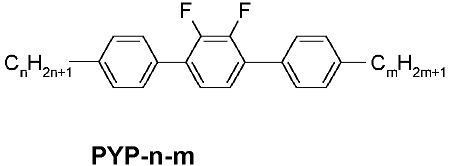

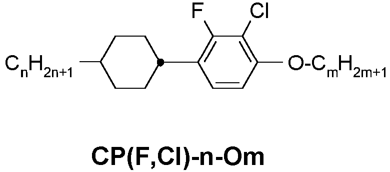

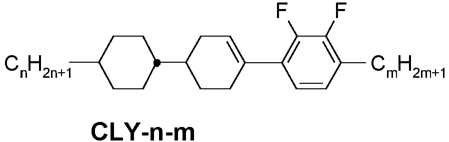

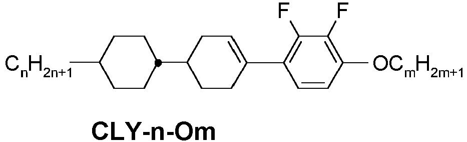

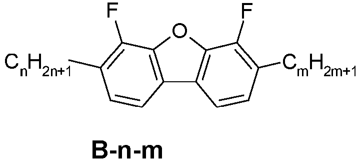

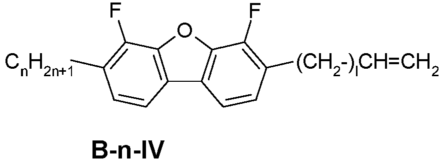

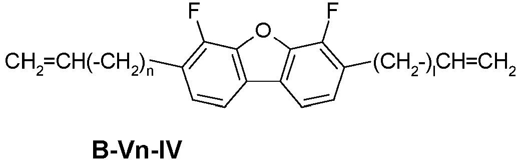

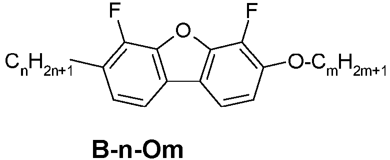

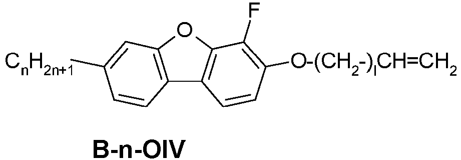

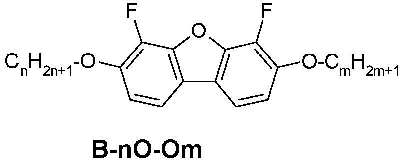

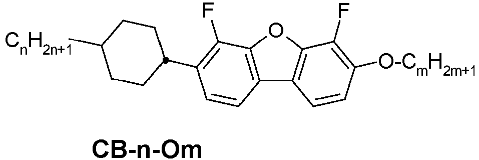

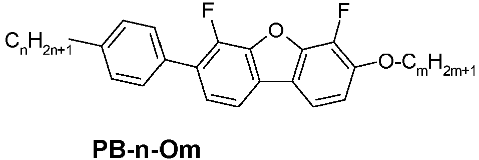

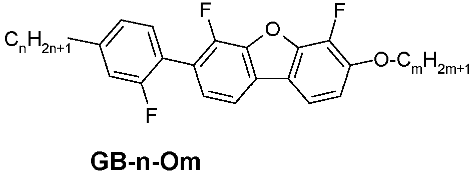

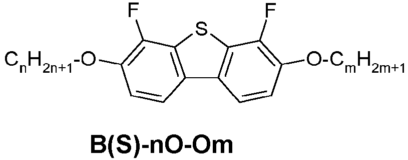

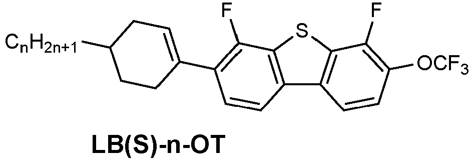

Table E shows chiral dopants which are optionally employed in the mixtures according to the invention.

**Table E**

| |
|---|
| 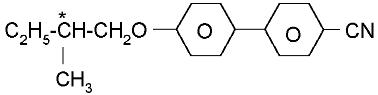 |
| **C 15** |
| 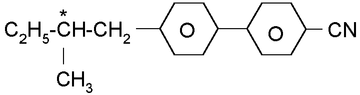 |
| **CB 15** |
| 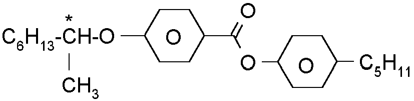 |
| **CM 21** |
| 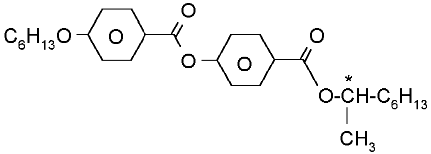 |
| **R S-811 / S-811** |
| 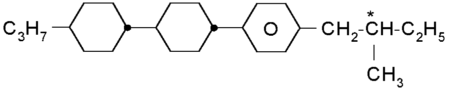 |
| **CM 44** |
| 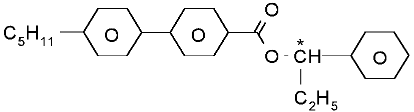 |
| **CM 45** |
| 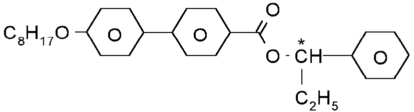 |
| **CM 47** |
| 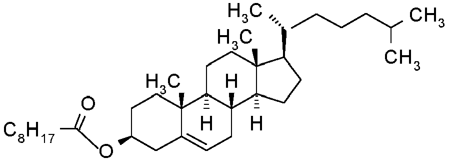 |
| **CN** |
| 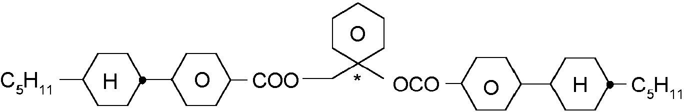 |
| **R-1011 / S-1011** |
| 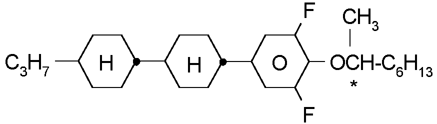 |
| **R-2011 / S-2011** |
| 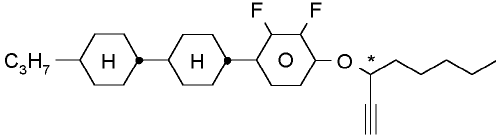 |
| **R-3011 / S-3011** |
| 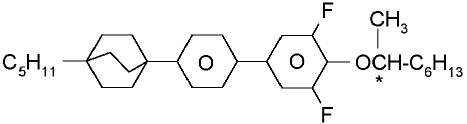 |
| **R-4011 / S-4011** |
| 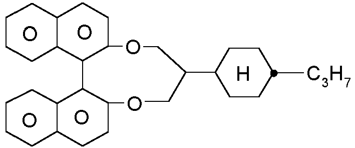 |
| **R-5011 / S-5011** |

In a preferred embodiment of the present invention, the media according to the invention comprise one or more compounds selected from the group of the compounds from Table E.

Table F shows stabilisers which can preferably be employed in the mixtures according to the invention in addition to the compounds of formula B. The parameter n here denotes an integer in the range from 1 to 12. In particular, the phenol derivatives shown can be employed as additional stabilisers since they act as antioxidants.

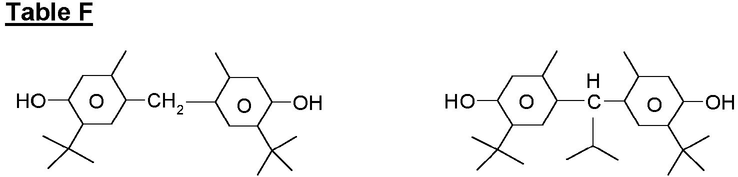

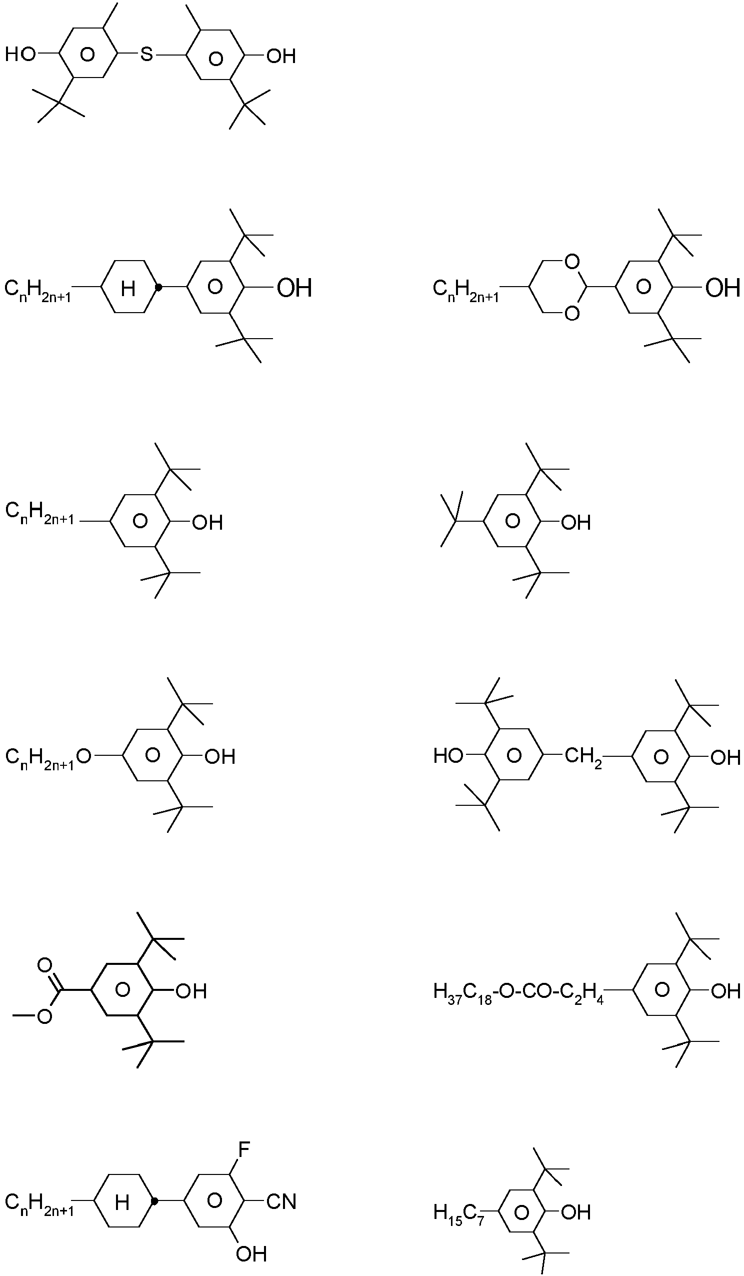

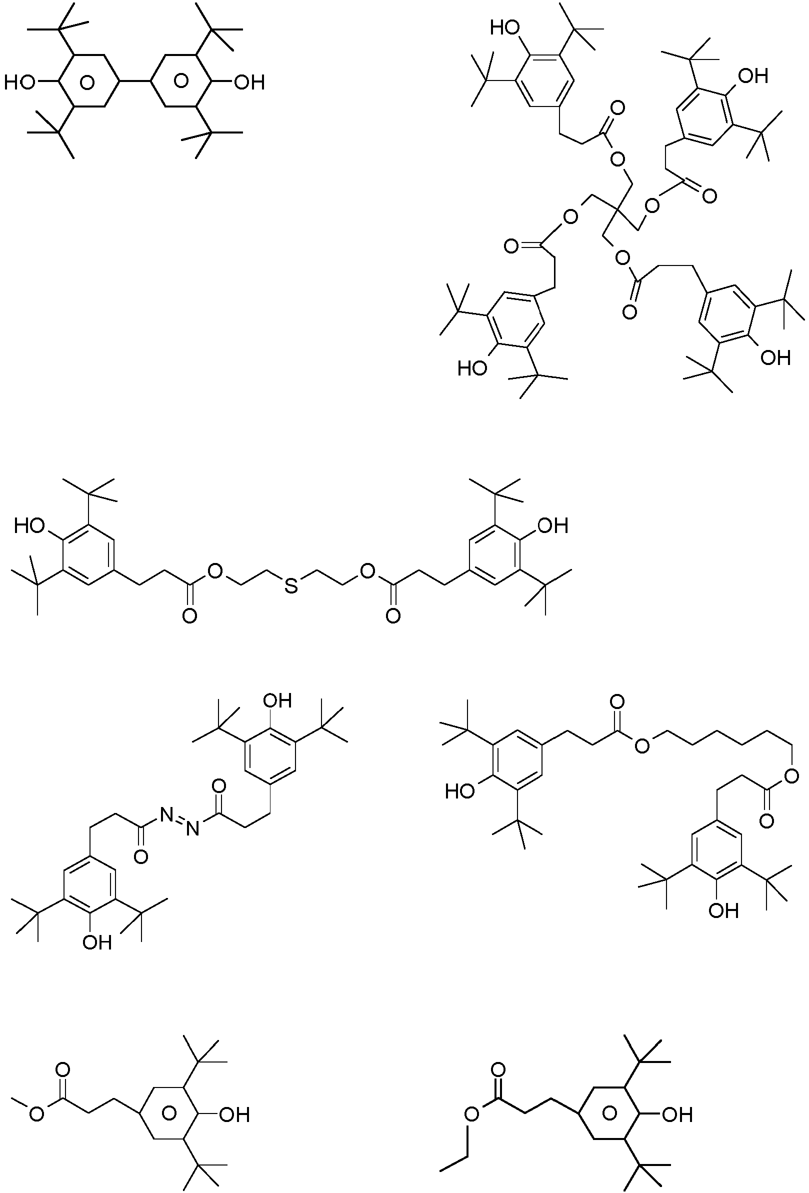

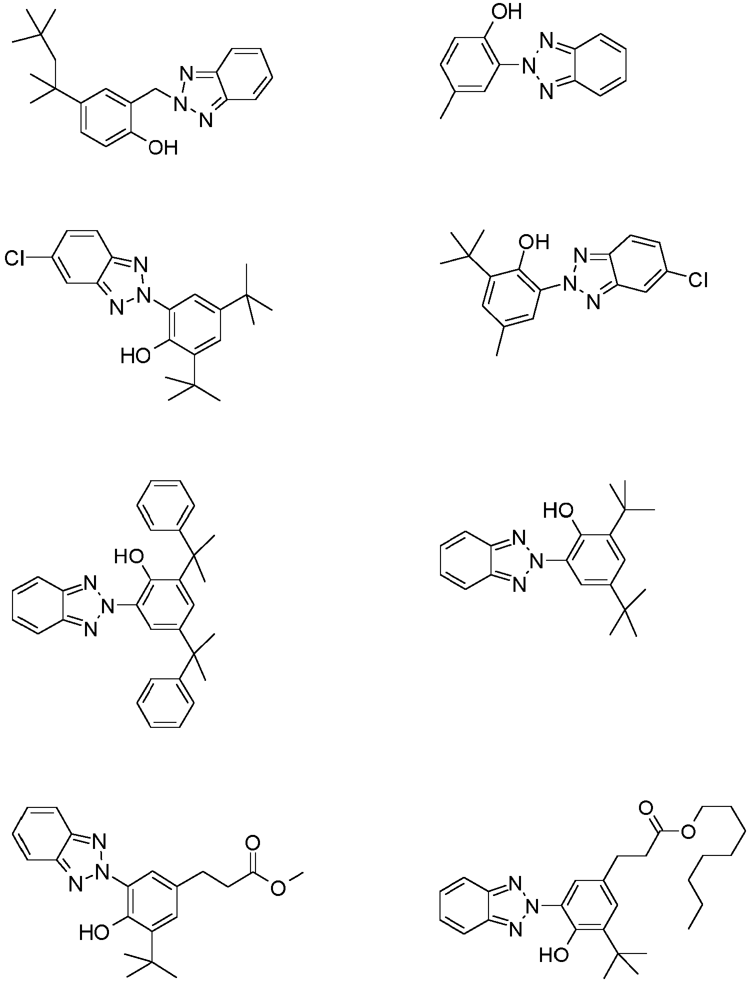

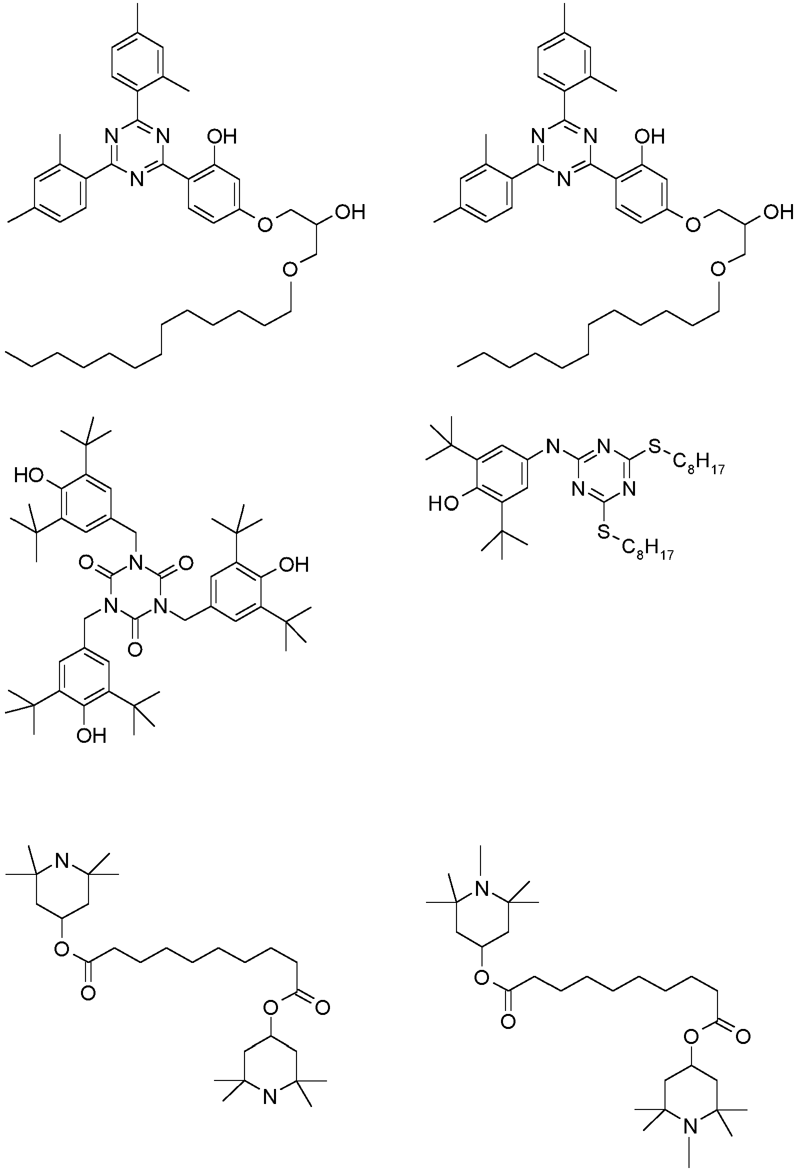

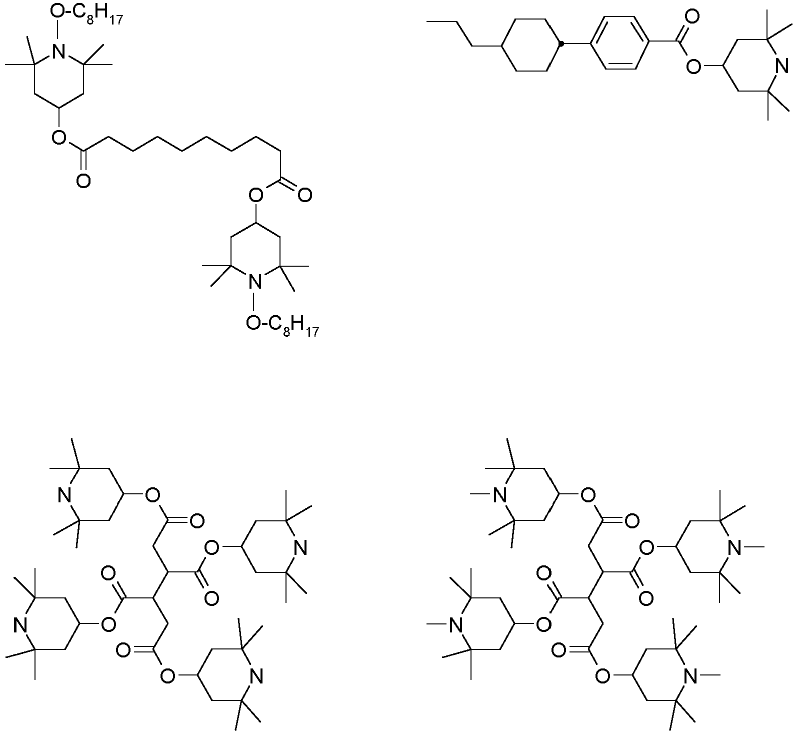

In a preferred embodiment of the present invention, the media according to the invention comprise one or more compounds selected from the group of the compounds from Table F.

The invention is explained in greater detail below with reference to working examples, but without being restricted thereby.

### Examples

The following examples explain the present invention without restricting it. However, they show the person skilled in the art preferred mixture concepts with compounds preferably to be employed and the respective concentrations thereof and combinations thereof with one another. In addition, the examples illustrate which properties and property combinations are accessible.

Unless explicitly noted otherwise, all temperature values indicated in the present application, such as, for example, for the melting point T(C,N), the transition from the smectic (Sm) to the nematic (N) phase T(Sm,N) and the clearing point T(N,I), are quoted in degrees Celsius (°C). M.p. denotes melting point, cl.p. = clearing point. The data between these symbols represent the transition temperatures.

All physical properties are and have been determined in accordance with "Merck Liquid Crystals, Physical Properties of Liquid Crystals", Status Nov. 1997, Merck KGaA, Germany, and apply for a temperature of 20°C, and Δn is determined at 589 nm and Δε at 1 kHz, unless explicitly indicated otherwise in each case.

Above and below, Δn denotes the optical anisotropy (589 nm, 20°C) and Δε denotes the dielectric anisotropy (1 kHz, 20°C).

The Δε and Δn values of the compounds according to the invention are obtained by extrapolation from liquid-crystalline mixtures consisting of 10% of the respective compound according to the invention and 90% of the commercially available liquid-crystal mixture ZLI-4792 (Merck KGaA, Darmstadt). In cases of limited solubility, the compound is measured in a mixture comprising only 5% of the compound.

### Abbreviations:

- dist.: distilled
- DMAP: 4-(Dimethylamino)pyridine
- DMF: N,N-Dimethylformamide
- DCM: Dichloromethane
- MTB ether: Methyl tert.-butyl ether
- TEA: Triethylamine
- THF: Tetrahydrofuran
- TPP: Triphenylphosphine
- Cr: crystalline
- Sm: smectic (optionally with subtype, e.g. SmA, if known)
- N: nematic
- I: isotropic

In addition, the following symbols are used:
- nₑ: extraordinary refractive index at 20°C and 589 nm,
- nₒ: ordinary refractive index at 20°C and 589 nm,
- Δn: optical anisotropy at 20°C and 589 nm,
- ε_{⊥}: dielectric permittivity perpendicular to the director at 20°C and 1 kHz,
- ε_{∥}: dielectric permittivity parallel to the director at 20°C and 1 kHz,
- Δε: dielectric anisotropy at 20°C and 1 kHz,
- cl.p., T(N,I): clearing point [°C],
- γ₁: rotational viscosity at 20°C [mPa·s],
- K₁: elastic constant, "splay" deformation at 20°C [pN],
- K₂: elastic constant, "twist" deformation at 20°C [pN],
- K₃: elastic constant, "bend" deformation at 20°C [pN].

### Synthesis Examples

### Synthesis Example 1 (BQU-3-F)

### 3-[Difluoro-(3,4,5-trifluorophenoxy)methyl]-4,6-difluoro-7-propyl-dibenzofuran

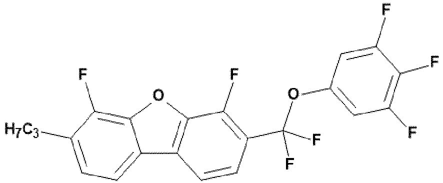

### Step 1.1: 4,6-Difluoro-7-propyl-dibenzofuran-3-carboxylic acid

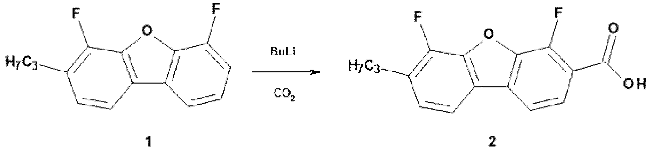

A solution of n-butyllithium (178 mL, 1.6 M in hexanes, 0.28 mol) is added to a solution of 4,6-difluoro-3-propyl-dibenzofuran (1, CAS 1809083-80-4) (58.2 g, 0.24 mol) in THF (1 L) at -70°C under argon atmosphere, and the mixture is stirred for 1 h. Dry ice (12.5 g, 0.28 mol) is added very carefully in small quantities, and the reaction mixture is stirred again for 1 h at -70°C. Then it is allowed to warm to -10°C and quenched with dist. water and hydrochloric acid (25%). The suspension is filtered *in vacuo,* and the remaining solid is washed with n-heptane. The residue is purified by recrystallization (n-heptane) to give white crystals of 4,6-difluoro-7-propyl-dibenzofuran-3-carboxylic acid (2).

### Step 1.2: 4,6-Difluoro-7-propyl-dibenzofuran-3-carbonyl chloride

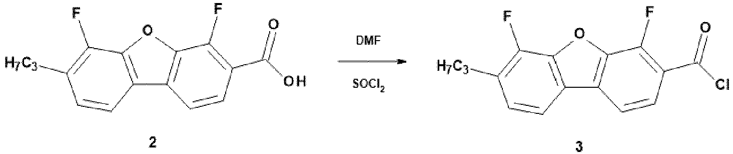

A suspension of 4,6-difluoro-7-propyl-dibenzofuran-3-carboxylic acid (2) (39.3 g, 0.13 mol), thionyl chloride (20 mL, 0.28 mol) and DMF (0.5 mL, 6 mmol) is heated at reflux temperature overnight. Then the reaction mixture is allowed to cool to room temperature and concentrated *in vacuo* to give 4,6-difluoro-7-propyl-dibenzofuran-3-carbonyl chloride (3) as a yellow solid.

### Step 1.3: 3-(5,6-Dihydro-4H-1,3-dithiin-1-ium-2-yl)-4,6-difluoro-7-propyl-dibenzofuran trifluoromethanesulfonate

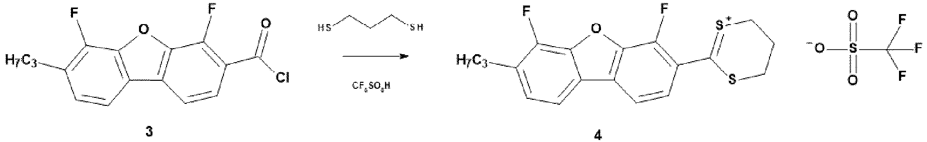

1,3-Propanedithiol (15.0 mL, 0.15 mol) is slowly added to a solution of 4,6-difluoro-7-propyl-dibenzofuran-3-carbonyl chloride **(3)** (41.0 g, 0.13 mol) in dichloromethane (300 mL) at 0°C under nitrogen atmosphere, and the mixture is stirred for 10 min at 10°C. Trifluoromethanesulfonic acid (19.0 mL, 0.22 mol) is slowly added at -5°C, and the reaction mixture is stirred for 30 min at -5°C. Then acetic anhydride (50.0 mL, 0.53 mol) is slowly added 0°C, followed by addition of diethyl ether (200 mL), and the reaction mixture is stirred for 1 h at 10°C. At last it is cooled down to -30°C and stirred for 10 min. The precipitate is quickly filtered *in vacuo* under nitrogen atmosphere, washed with cold diethyl ether and dried *in vacuo* to give 3-(5,6-dihydro-4*H*-1,3-dithiin-1-ium-2-yl)-4,6-difluoro-7-propyl-dibenzofuran-trifluoromethanesulfonate **(4)** as yellow crystals.

### Step 1.4: 3-[Difluoro-(3,4,5-trifluorophenoxy)methyl]-4,6-difluoro-7-propyl-dibenzofuran

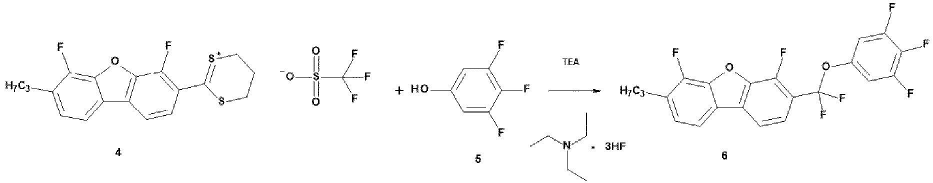

A mixture of 3,4,5-trifluorophenol **(5,** CAS 99627-05-1) (3.3 g, 22 mmol) and TEA (3.5 mL, 25 mmol) in dichloromethane (10 mL) is added to a solution of 3-(5,6-dihydro-4*H*-1,3-dithiin-1-ium-2-yl)-4,6-difluoro-7-propyl-dibenzofuran trifluoromethanesulfonate **(4)** (10.5 g, 20 mmol) in dichloromethane (70 mL) at -70°C, and the reaction mixture is stirred for 1 h at -70°C. It is treated with triethylamine trihydrofluoride (6.8 mL, 41 mmol) at -70°C, followed by addition of a solution of bromine (2.6 mL, 51 mmol) in dichloromethane (10 mL) after 1 h. The reaction mixture is stirred for 30 min at -70°C. Then morpholine (3.5 mL, 40 mmol) is added at -20°C, and the mixture is stirred another 30 min at 0°C. The reaction mixture is poured into a mixture of ice/water and aqueous potassium hydroxide. The aqueous phase is separated and extracted with dichloromethane. The combined organic phases are washed with sodium bicarbonate, dried (sodium sulphate) and concentrated *in vacuo.* The residue is purified by silica gel chromatography (solvent heptane/1-chlorbutane) and crystallization (heptane/ethanol) to give white crystals of 3-[difluoro-(3,4,5-trifluorophenoxy)methyl]-4,6-difluoro-7-propyl-dibenzofuran **(6).**

Compound **(6)** has the following phase characteristics:
K 109°C I.

### Synthesis Example 2 (B(S)QU-2O-F)

### 3-[Difluoro-(3,4,5-trifluorophenoxy)methyl]-7-ethoxy-4,6-difluoro-dibenzothiophene

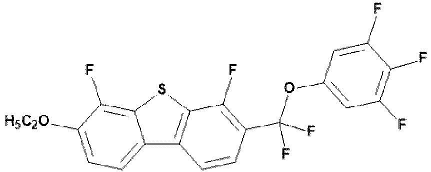

### Step 2.1: 7-Ethoxy-4,6-difluoro-dibenzothiophene-3-carboxylic acid

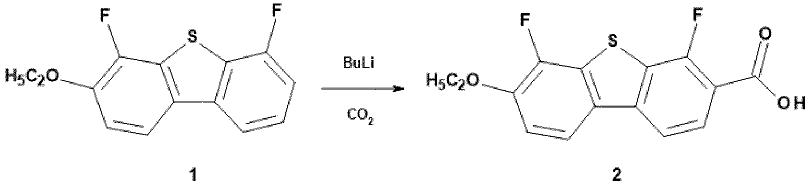

A solution of n-butyllithium (145 mL, 1.6 M in hexanes, 0.23 mol) is added to a solution of 3-ethoxy-4,6-difluoro-dibenzothiophene **(1,** CAS 1820028-78-1) (50.0 g, 0.19 mol) in **THF** (1.0 L) at -70°C under Argon atmosphere. After stirring for 1 h, powdered dry ice (10.0 g, 0.23 mol) is added very carefully in small quantities. The reaction mixture is stirred for 1 h at -70°C. Then it is allowed to warm to -10°C, and the reaction is quenched with dist. water (200 mL) and acidified with hydrochloric acid. The suspension is filtered in *vacuo* and the remaining solid is washed with n-heptane. The residue is purified by recrystallization from n-heptane to give white crystals of 7-ethoxy-4,6-difluoro-dibenzothiophene-3-carboxylic acid **(2).**

### Step 2.2: 7-Ethoxy-4,6-difluoro-dibenzothiophene-3-carbonyl chloride

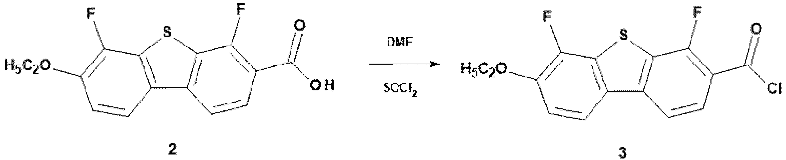

Thionyl chloride (25.0 mL, 0.35 mol) is added to 7-ethoxy-4,6-difluoro-dibenzothiophene-3-carboxylic acid **(2)** (51.5 g, 0.16 mol). Then a second portion of thionyl chloride (75 mL, 1.04 mol) is added, and the suspension is heated at reflux temperature overnight. The reaction mixture is allowed to cool to room temperature, and excess thionyl chloride is removed with a Dean Stark trap. The residue is concentrated *in vacuo* to give 7-ethoxy-4,6-difluoro-dibenzothiophene-3-carbonyl chloride **(3)** as a yellow solid.

### Step 2.3: 3-(5,6-Dihydro-4H-1,3-dithiin-1-ium-2-yl)-7-ethoxy-4,6-difluoro-dibenzothiophene-trifluoromethanesulfonate

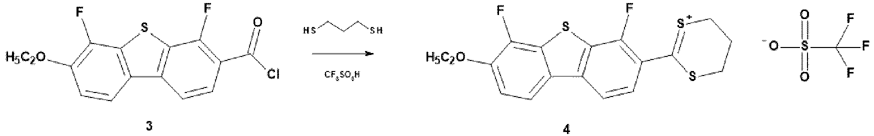

1,3-Propanedithiol (17.0 mL, 0.17 mol) is slowly added to a solution of 7-ethoxy-4,6-difluoro-dibenzothiophene-3-carbonyl chloride **(3)** (53.6 g, 0.16 mol) in DCM (650 mL) at 0°C under nitrogen atmosphere. The solution is stirred for 10 min at 10°C. Trifluoromethanesulfonic acid (22.0 mL, 0.25 mol) is slowly added at -5°C, and the mixture is stirred for 30 min at this temperature. Then it is treated carefully with acetic anhydride (55.0 mL, 0.58 mol) at 0°C. Diethyl ether (220 mL) is added, and the mixture is stirred for 1 h at 10°C. At last the reaction mixture is cooled down to -30°C, stirred for 10 min, and the precipitate is filtered *in vacuo* under nitrogen atmosphere, washed with cold diethyl ether and dried (desiccator) to give red crystals of 3-(5,6-dihydro-4*H*-1,3-dithiin-1-ium-2-yl)-7-ethoxy-4,6-difluoro-dibenzothiophene-trifluoromethanesulfonate **(4).**

### Step 2.4: 3-[Difluoro-(3,4,5-trifluorophenoxy)methyl]-7-ethoxy-4,6-difluoro-dibenzothiophene

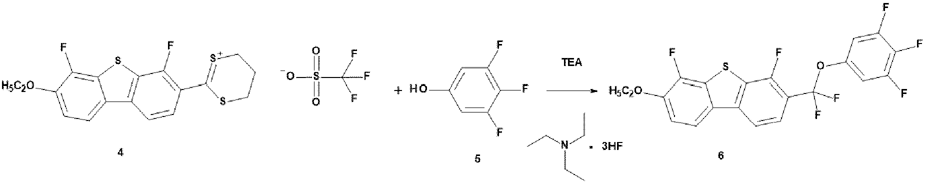

A solution of 3-(5,6-dihydro-4*H*-1,3-dithiin-1-ium-2-yl)-7-ethoxy-4,6-difluoro-dibenzothiophene-trifluoromethanesulfonate **(4)** (7.0 g, 13 mmol) in dichloromethane (100 mL) is treated with a mixture of 3,4,5-trifluorophenol **(5,** CAS 99627-05-1) (2.0 g, 13 mmol) and TEA (2.2 mL, 16 mmol) in DCM (10 mL) at -70°C. The suspension is stirred for 1 h at -70°C. Then triethylamine trihydrofluoride (4.5 mL, 27 mmol) is added at -70°C. After 1 h a solution of bromine (1.7 mL, 33 mmol) in DCM (10 mL) is added, and the reaction mixture is stirred for 30 min at -70°C. At last morpholine (2.3 mL, 26 mmol) is added at -20°C, and the reaction mixture is stirred additional 30 min at 0°C. The reaction mixture is poured into a mixture of ice/water and potassium hydroxide. The aqueous phase is separated and extracted with dichloromethane. The combined organic phases are washed with sodium bicarbonate, dried (sodium sulphate) and concentrated *in vacuo.* The residue is purified by silica gel chromatography (solvent heptane/1-chlorobutane) and crystallization (heptane/ethanol) to give white crystals of 3-[difluoro-(3,4,5-trifluorophenoxy)methyl]-7-ethoxy-4,6-difluoro-dibenzothiophene **(6).**

Compound **(6)** has the following phase characteristics:
K 126°C SmA 130°C I.

### Synthesis Example 3 (B(S)QU-4O-F)

### 3-Butoxy-7-[difluoro-(3,4,5-trifluorophenoxy)methyl]-4,6-difluoro-dibenzothiophene

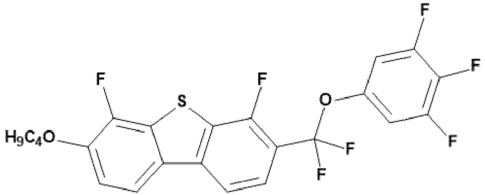

### Step 3.1: 4,6-Difluorodibenzothiophen-3-ol

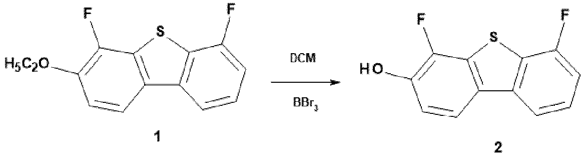

Boron tribromide (8.5 mL, 90 mmol) is added to a solution of 3-ethoxy-4,6-difluoro-dibenzothiophene (1, CAS 1820028-78-1) (21.8 g, 79 mmol) in DCM (150 mL) at 15°C, and the suspension is stirred at room temperature overnight. The reaction mixture is poured into ice/water, and the aqueous phase is separated and extracted with MTB ether. The combined organic phases are washed with sodium bicarbonate, dried (sodium sulphate) and concentrated *in vacuo.* The residue is purified by silica gel chromatography (solvent DCM) to give yellow crystals of 4,6-difluorodibenzothiophen-3-ol **(2).**

### Step 3.2: 3-Butoxy-4,6-difluoro-dibenzothiophene

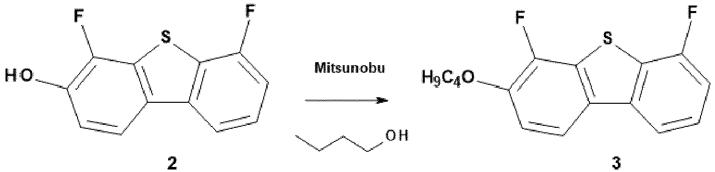

Diisopropyl azodicarboxylate (25 mL, 0.13 mol) is slowly added to a solution of 4,6-difluorodibenzothiophen-3-ol **(2)** (22.3 g, 94 mmol), TPP (31.0 g, 0.12 mol) and 1-butanol (12 mL, 0.13 mol) in THF (250 mL) at room temperature under nitrogen atmosphere. The reaction mixture is stirred for 3 d at room temperature and then concentrated *in vacuo.* The residue is purified by silica gel chromatography (solvent 1-chlorobutane) to give 3-butoxy-4,6-difluoro-dibenzothiophene **(3)** as a white solid.

### Step 3.3: 7-Butoxy-4,6-difluoro-dibenzothiophene-3-carboxylic acid

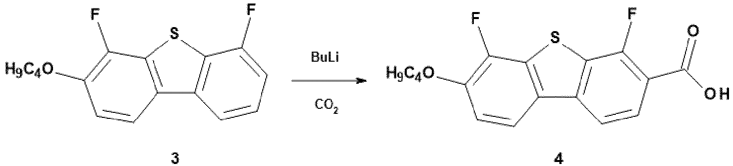

A solution of *n*-butyllithium (70 mL, 1.6 M in hexanes, 0.11 mol) is added to a solution of 3-butoxy-4,6-difluoro-dibenzothiophene **(3)** (26.6 g, 88 mmol) in THF (500 mL) at -70°C under nitrogen atmosphere. After 1 h powdered dry ice (5.0 g, 0.11 mol) is added carefully. The reaction mixture is stirred for 1 h at -70°C. Then it is allowed to warm to -10°C, and the reaction is quenched with dist. water and hydrochloric acid (25%). The suspension is filtered in *vacuo,* and the remaining solid is washed with n-heptane. The residue is purified by crystallization (*n*-heptane) to give white crystals of 7-butoxy-4,6-difluoro-dibenzothiophene-3-carboxylic acid **(4).**

### Step 3.4: 7-Butoxy-4,6-difluoro-dibenzothiophene-3-carbonyl chloride

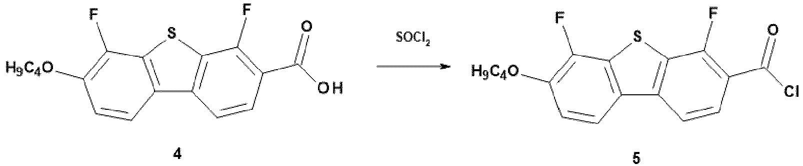

Thionyl chloride (11.0 mL, 0.15 mol) is added to 7-butoxy-4,6-difluoro-dibenzothiophene-3-carboxylic acid **(4)** (24.9 g, 74 mmol). Then a second portion of thionyl chloride (100 mL) is added, and the suspension is heated at reflux temperature overnight. Then it is allowed to cool to room temperature. Thionyl chloride (50 mL) is added again, and the mixture is stirred at reflux temperature overnight. The reaction mixture is concentrated *in vacuo* to give 7-butoxy-4,6-difluoro-dibenzothiophene-3-carbonyl chloride **(5)** as a yellow solid.

### Step 3.5: 3-Butoxy-7-(5,6-dihydro-4H-1,3-dithiin-1-ium-2-yl)-4,6-difluoro-dibenzothiophene-trifluoromethanesulfonate

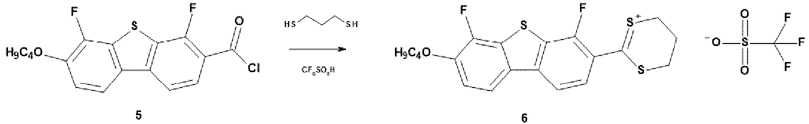

1,3-Propanedithiol (7.5 mL, 75 mmol) is slowly added to a solution of 7-butoxy-4,6-difluoro-dibenzothiophene-3-carbonyl chloride **(5)** (26.2 g, 74 mmol) in DCM (300 mL) at 0°C under nitrogen atmosphere. The solution is stirred for 10 min at 10°C. It is treated with trifluoromethanesulfonic acid (9.8 mL, 0.11 mol) at -10°C, and the reaction mixture is stirred for 30 min at -5°C. Then acetic anhydride (24.5 mL, 0.26 mol) is slowly added at 0°C. Diethyl ether (100 mL) is added, and the reaction mixture is stirred for 1 h at 10°C. At last it is cooled down to -30°C and stirred for 10 min. The precipitate is quickly filtered *in vacuo* under nitrogen atmosphere, washed with cold diethyl ether and dried (desiccator) to give red crystals of 3-butoxy-7-(5,6-dihydro-4*H*-1,3-dithiin-1-ium-2-yl)-4,6-difluoro-dibenzothiophene-trifluoromethanesulfonate **(6).**

### Step 3.6: 3-Butoxy-7-[difluoro-(3,4,5-trifluorophenoxy)methyl]-4,6-difluoro-dibenzothiophene

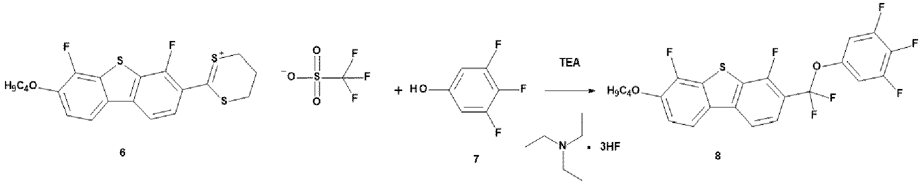

A solution of 3-butoxy-7-(5,6-dihydro-4*H*-1,3-dithiin-1-ium-2-yl)-4,6-difluoro-dibenzothiophene-trifluoromethanesulfonate **(6)** (5.0 g, 9 mmol) in DCM (100 mL) is treated with a mixture of 3,4,5-trifluorophenol **(7,** CAS 99627-05-1) (1.4 g, 9 mmol) and TEA (1.5 mL, 11 mmol) in DCM (10 mL) at -70°C. The suspension is stirred for 1 h at -70°C. Triethylamine trihydrofluoride (3.0 mL, 18 mmol) is added at -70°C, and after 1 h a solution of bromine (1.3 mL, 25 mmol) in DCM (10 mL) is added to the reaction mixture. It is stirred for 30 min at -70°C. At last morpholine (1.6 mL, 18 mmol) is added at -20°C, and the mixture is stirred additional 30 min at 0°C. The reaction mixture is poured into a mixture of ice/water and potassium hydroxide. The aqueous phase is separated and extracted with DCM. The combined organic phases are washed with sodium bicarbonate, dried (sodium sulphate) and concentrated *in vacuo.* The residue is purified by silica gel chromatography (solvent heptane/1-chlorobutane) and crystallization (ethanol) to give white crystals of 3-butoxy-7-[difluoro-(3,4,5-trifluorophenoxy)methyl]-4,6-difluoro-dibenzothiophene **(8).**

Compound **(8)** has the following phase characteristics:
K 112°C SmA 124°C I.

### Synthesis Example 4 (B(S)QU-3-F)

### 3-[Difluoro-(3,4,5-trifluorophenoxy)-methyl]-4,6-difluoro-7-propyl-dibenzothiophene

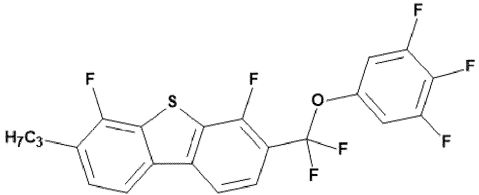

### Step 4.1: (4,6-Difluorodibenzothiophen-3-yl) trifluoromethanesulfonate

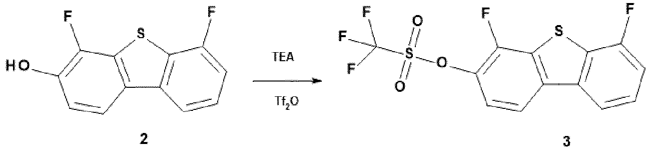

Trifluoromethanesulfonic anhydride (35 mL, 0.21 mol) is added to a solution of 4,6-difluorodibenzothiophen-3-ol **(2,** see step 3.1) (44.8 g, 0.19 mol), TEA (40.0 mL, 0.29 mol) and DMAP (1.0 g, 8 mmol) in DCM (400 mL) at 5°C. The reaction mixture is stirred at room temperature overnight. It is purified by silica gel filtration (solvent 1-chlorobutane) to give white crystals of (4,6-difluorodibenzothiophen-3-yl) trifluoromethanesulfonate **(3).**

### Step 4.2: 4,6-Difluoro-3-propyl-dibenzothiophene

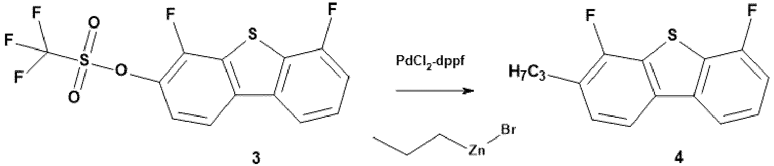

[1,1'-Bis(diphenylphosphino)ferrocene]palladium(II)dichloride (4.0 g, 5.5 mmol) is added to a solution of (4,6-difluorodibenzothiophen-3-yl) trifluoromethanesulfonate **(3)** (69.7 g, 0.19 mol) in THF (700 mL) at room temperature. Then propylzinc bromide solution (400 mL, 0.5 M in THF, 0.20 mol) is added at 50°C. The reaction mixture is stirred at reflux temperature overnight. Then it is cooled to room temperature and diluted with MTB ether and dist. water. The aqueous phase is separated and extracted with MTB ether. The combined organic phases are washed with dist. water and brine, dried (sodium sulphate) and concentrated *in vacuo.* The residue is purified by silica gel chromatography (solvent heptane) to give yellow crystals of 4,6-difluoro-3-propyl-dibenzothiophene **(4).**

### Step 4.3: 4,6-Difluoro-7-propyl-dibenzothiophene-3-carboxylic acid

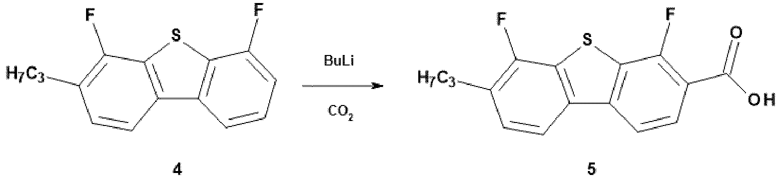

A solution of n-butyllithium (135 mL, 1.6 M in hexanes, 0.22 mol) is added to a solution of 4,6-difluoro-3-propyl-dibenzothiophene (4) (46.9 g, 0.17 mol) in THF (500 mL) at -70°C under Argon atmosphere. After 1 h powdered dry ice (9.5 g, 0.22 mol) is added carefully, and the reaction mixture is stirred for 1 h at -70°C. Then it is allowed to warm to -10°C, and the reaction is quenched with dist. water and hydrochloric acid (25%). The suspension is filtered in *vacuo,* and the remaining solid is washed with n-heptane. The residue is purified by crystallization (*n*-heptane) to give white crystals of 4,6-difluoro-7-propyl-dibenzothiophene-3-carboxylic acid **(5).**

### Step 4.4: 4,6-Difluoro-7-propyl-dibenzothiophene-3-carbonyl chloride

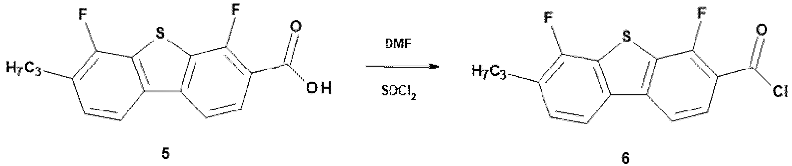

4,6-Difluoro-7-propyl-dibenzothiophene-3-carboxylic acid **(5)** (48.2 g, 0.15 mol) is treated with thionyl chloride (25 mL, 0.35 mol) and DMF (1.0 mL, 13 mmol), followed by addition of a second portion of thionyl chloride (50 mL). The suspension is heated at reflux temperature overnight. Then thionyl chloride (50 mL) is added again, and the reaction mixture is heated at reflux temperature overnight. It is allowed to cool to room temperature and concentrated *in vacuo* to give 4,6-difluoro-7-propyl-dibenzofuran-3-carbonyl chloride **(6)** as a yellow solid.

### Step 4.5: 3-(5,6-Dihydro-4H-1,3-dithiin-1-ium-2-yl)-4,6-difluoro-7-propyl-dibenzothiophene trifluoromethanesulfonate

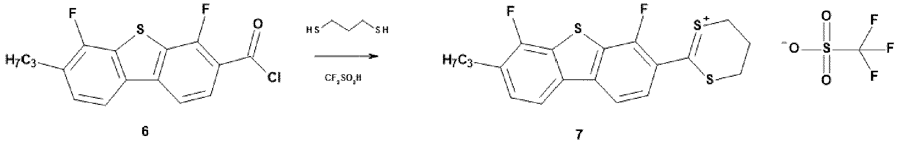

1,3-Propanedithiol (17 mL, 0.17 mol) is slowly added to a solution of 4,6-difluoro-7-propyl-dibenzothiophene-3-carbonyl chloride **(6)** (52.6 g, 0.16 mol) in DCM (500 mL) at 0°C under nitrogen atmosphere. The solution is stirred for 10 min at 10°C. Trifluoromethanesulfonic acid (22 mL, 0.25 mol) is slowly added at -10°C, and the reaction mixture is stirred for 30 min at -5°C. Then acetic anhydride (54 mL, 0.57 mol) is slowly added at 0°C. The reaction mixture is diluted with diethyl ether (250 mL) and stirred for 1 h at 10°C. At last it is cooled down to -40°C and stirred for 30 min. The precipitate is quickly filtered *in vacuo* under nitrogen atmosphere, washed with cold diethyl ether and dried (desiccator) to give red crystals of 3-(5,6-dihydro-4H-1,3-dithiin-1-ium-2-yl)-4,6-difluoro-7-propyl-dibenzothiophene trifluoromethanesulfonate **(7).**

### Step 4.6: 3-[Difluoro-(3,4,5-trifluorophenoxy)methyl]-4,6-difluoro-7-propyl-dibenzothiophene

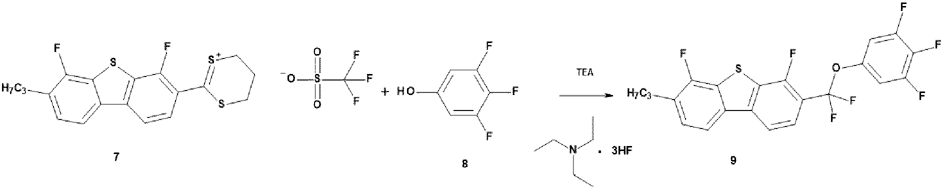

A mixture of 3,4,5-trifluorophenol **(8,** CAS 99627-05-1) (3.7 g, 24 mmol) and TEA (3.8 mL, 27 mmol) in DCM (15 mL) is added to a solution of 3-(5,6-dihydro-4H-1,3-dithiin-1-ium-2-yl)-4,6-difluoro-7-propyl-dibenzothiophene trifluoromethanesulfonate **(7)** (12.0 g, 23 mmol) in DCM (70 mL) at -70°C. The reaction mixture is stirred for 1 h at -70°C and then treated with triethylamine trihydrofluoride (7.6 mL, 46 mmol). After 1 h a solution of bromine (3.0 mL, 59 mmol) in DCM (15 mL) is added, and the reaction mixture is stirred for 30 min at -70°C. At last morpholine (4.0 mL, 46 mmol) is added at -20°C, and the mixture is stirred for 30 min at 0°C. It is poured into a mixture of ice water and potassium hydroxide. The aqueous phase is separated and extracted with DCM. The combined organic phases are washed with sodium bicarbonate, dried (sodium sulphate) and concentrated *in vacuo.* The residue is purified by silica gel chromatography (solvent heptane/1-chlorobutane) and crystallization (heptane/ethanol) to give white crystals of 3-[difluoro-(3,4,5-trifluorophenoxy)methyl]-4,6-difluoro-7-propyl-dibenzothiophene **(9).**

Compound **(9)** has the following phase characteristics:
K 95°C I.
Δε = 13.3
ε_{∥} = 22.8
ε_{⊥} = 9.5

### Synthesis Example 5 (B(S)QU-3-OT)

### 3-[[3,5-Difluoro-4-(trifluoromethoxy)phenoxy]-difluoromethyl]-4,6-difluoro-7-propyl-dibenzothiophene

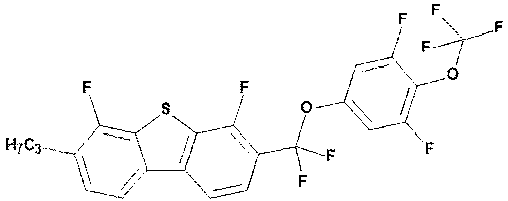

### Step 5.1: 3-[[3,5-Difluoro-4-(trifluoromethoxy)phenoxy]-difluoromethyl]-4,6-difluoro-7-propyl-dibenzothiophene

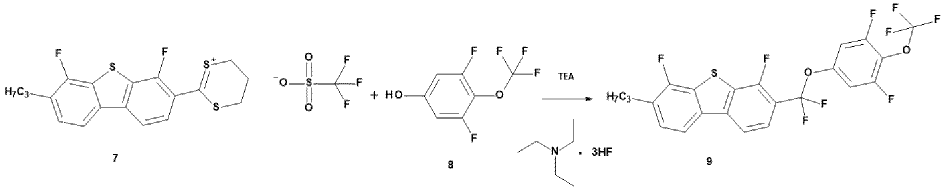

A mixture of 3,5-difluoro-4-(trifluoromethoxy)phenol **(8,** CAS 195206-85-0) (6.0 g, 24 mmol) and TEA (3.9 mL, 28 mmol) in DCM (15 mL) is added to a solution of 3-(5,6-dihydro-4*H*-1,3-dithiin-1-ium-2-yl)-4,6-difluoro-7-propyl-dibenzothiophene trifluoromethanesulfonate **(7,** see step 4.5) (12.0 g, 23 mmol) in DCM (70 mL) at -70°C, and the reaction mixture is stirred for 1 h. Then it is treated with triethylamine trihydrofluoride (7.5 mL, 45 mmol) at - 70°C. After 1 h a solution of bromine (2.9 mL, 57 mmol) in DCM (15 mL) is added, and the mixture is stirred for 30 min at -70°C. At last morpholine (4.0 mL, 46 mmol) is added at -20°C, and the reaction mixture is stirred for 30 min at 0°C. It is poured into a mixture of ice water and potassium hydroxide. The aqueous phase is separated and extracted with DCM. The combined organic phases are washed with sodium bicarbonate, dried (sodium sulphate) and concentrated *in vacuo.* The residue is purified by silica gel chromatography (solvent heptane/1-chlorobutane) and crystallization (heptane/ethanol) to give white crystals of 3-[[3,5-difluoro-4-(trifluoromethoxy)phenoxy]-difluoromethyl]-4,6-difluoro-7-propyl-dibenzothiophene **(9).**

Compound **(9)** has the following phase characteristics:
K 103°C SmA (92°C) I.
Δε = 14.9
ε_{∥} = 23.8
ε_{⊥} = 8.9

### Synthesis Example 6 (B(S)QU-3-T)

### 3-[[3,5-Difluoro-4-(trifluoromethyl)phenoxy]-difluoromethyl]-4,6-difluoro-7-propyl-dibenzothiophene

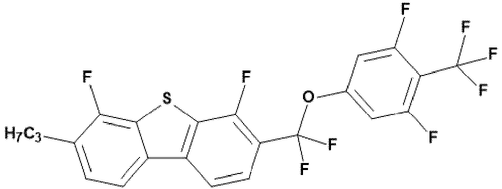

### Step 6.1: 3-[[3,5-Difluoro-4-(trifluoromethyl)phenoxy]-difluoromethyl]-4,6-difluoro-7-propyl-dibenzothiophene

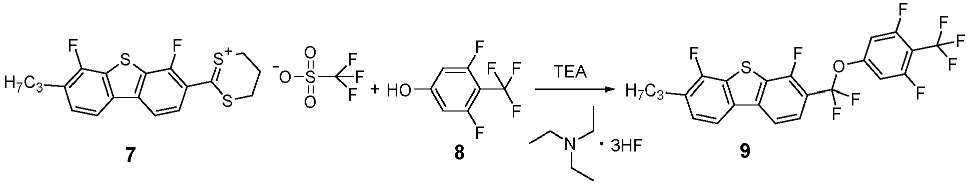

A mixture of 3,5-difluoro-4-(trifluoromethyl)phenol **(8,** CAS 116640-11-0) (7.5 g, 24 mmol) and TEA (3.8 mL, 27 mmol) in DCM (15 mL) is added to a solution of 3-(5,6-dihydro-4*H*-1,3-dithiin-1-ium-2-yl)-4,6-difluoro-7-propyl-dibenzothiophene trifluoromethanesulfonate **(7,** see step 4.5) (12.0 g, 23 mmol) in DCM (70 mL) at -70°C, and the reaction mixture is stirred for 1 h. Then it is treated with triethylamine trihydrofluoride (7.6 mL, 46 mmol) at - 70°C. After 1 h a solution of bromine (3.0 mL, 59 mmol) in DCM (15 mL) is added, and the mixture is stirred for 30 min at -70°C. At last morpholine (4.0 mL, 46 mmol) is added at -20°C, and the reaction mixture is stirred for 30 min at 0°C. It is poured into a mixture of ice water and potassium hydroxide. The aqueous phase is separated and extracted with DCM. The combined organic phases are washed with sodium bicarbonate, dried (sodium sulphate) and concentrated *in vacuo.* The residue is purified by silica gel chromatography (solvent heptane/1-chlorobutane) and crystallization (heptane/ethanol) to give white crystals of 3-[[3,5-difluoro-4-(trifluoromethyl)phenoxy]-difluoro-methyl]-4,6-difluoro-7-propyl-dibenzothiophene **(9).**

Compound **(9)** has the following phase characteristics:
K 128°C I.

### Synthesis Example 7 (BOIU-2O-F)

### 3-Ethoxy-4,6-difluoro-7-[(3,4,5-trifluorophenyl)methoxy]dibenzofuran

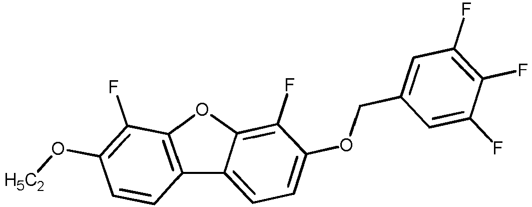

### Step 7.1: 3-Ethoxy-4,6-difluoro-7-[(3,4,5-trifluorophenyl)methoxy]dibenzofuran

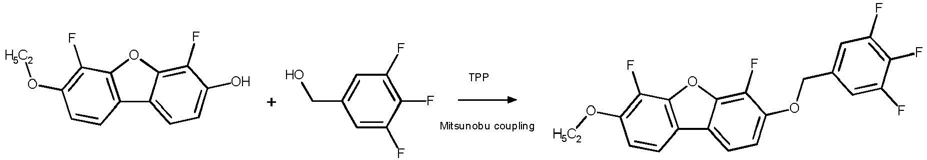

Diisopropyl azodicarboxylate (3.4 mL, 17 mmol) is added dropwise to a mixture of 7-ethoxy-4,6-difluoro-dibenzofuran-3-ol **(1,** CAS 2254195-97-4) (4.0 g, 14 mmol), (3,4,5-trifluorophenyl)methanol **(2)** (2.8 g, 17 mmol) and TPP (4.5 g, 17 mmol) in THF (50 mL) under argon atmosphere at room temperature. The reaction mixture is stirred at room temperature overnight. Then it is concentrated *in vacuo.* The residue is purified by silica gel chromatography (solvent DCM) and crystallization (1-chlorobutane) to give white crystals of 3-ethoxy-4,6-difluoro-7-[(3,4,5-trifluorophenyl)methoxy]dibenzofuran (3).

Compound (3) has the following phase characteristics:
K 177°C I.

### Synthesis Example 8 (B(S)OIU-2O-F) 3-Ethoxy-4,6-difluoro-7-[(3,4,5-trifluorophenyl)methoxy]dibenzothiophene

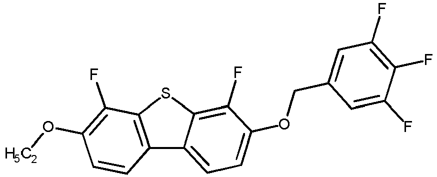

### Step 8.1: 3-Ethoxy-4,6-difluoro-7-[(3,4,5-trifluorophenyl)methoxy]-dibenzothiophene

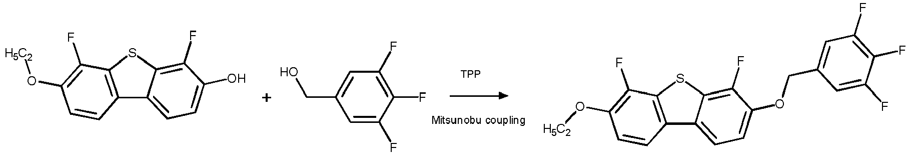

Diisopropyl azodicarboxylate (3.4 mL, 17 mmol) is added dropwise to a mixture of 7-ethoxy-4,6-difluoro-dibenzothiophen-3-ol (**1**, CAS 1820028-80-5) (4.0 g, 14 mmol), (3,4,5-trifluorophenyl)methanol (**2**) (2.8 g, 17 mmol) and TPP (4.5 g, 17 mmol) in THF (50 mL) under argon atmosphere at room temperature. The reaction mixture is stirred at room temperature overnight. Then it is concentrated *in vacuo.* The residue is purified by silica gel chromatography (solvent 1-chlorobutane) and crystallization (1-chlorobutane) to give yellow crystals of 3-ethoxy-4,6-difluoro-7-[(3,4,5-trifluorophenyl)methoxy]dibenzothiophene (**3**).

Compound (**3**) has the following phase characteristics:
K 169°C I.

### Further Synthesis Examples:

In analogy to the above described examples the following exemplary compounds are obtained:
In the following table the following abbreviations for the end groups are used

| | |
|---|---|
| *c*-C₃H₅ | 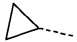 |
| *c*-C₃H₅CH₂ | 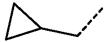 |
| *c*-C₄H₇ | 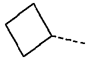 |
| *c*-C₅H₇ | 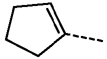 |
| *c*-C₅H₉ | 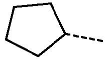 |

The physical properties are given at a temperature of 20°C and γ₁ is given in mPa·s. Phase transition temperatures are given in °C.

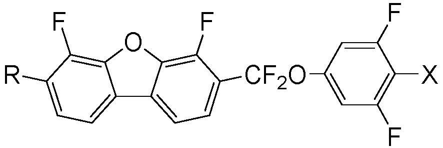

| No: A- | R | X | Phase Range; properties |
|---|---|---|---|
| 1 | CH₃ | F | |
| 2 | C₂H₅ | F | |
| 3 | *n*-C₃H₇ | F | see Synthesis Example 1 |
| 4 | *n*-C₄H₉ | F | |
| 5 | *n*-C₅H₁₁ | F | |
| 6 | *n*-C₆H₁₃ | F | |
| 7 | *n*-C₇H₁₅ | F | |
| 8 | *n*-C₈H₁₇ | F | |
| 9 | *c*-C₃H₅ | F | |
| 10 | *c*-C₃H₅CH₂ | F | |
| 11 | *c*-C₄H₇ | F | |
| 12 | *c*-C₅H₇ | F | |
| 13 | *c*-C₅H₉ | F | |
| 14 | CH₂=CH | F | |
| 15 | CH₃CH=CH | F | |
| 16 | CH₂=CH(CH₂)₂ | F | |
| 17 | CH₃O | F | |
| 18 | C₂H₅O | F | |
| 19 | *n*-C₃H₇O | F | |
| 20 | *n*-C₄H₉O | F | |
| 21 | *n*-C₅H₁₁O | F | |
| 22 | CH₃ | CF₃ | |
| 23 | C₂H₅ | CF₃ | |
| 24 | *n*-C₃H₇ | CF₃ | |
| 25 | *n*-C₄H₉ | CF₃ | |
| 26 | *n*-C₅H₁₁ | CF₃ | |
| 27 | *n*-C₆H₁₃ | CF₃ | |
| 28 | *n*-C₇H₁₅ | CF₃ | |
| 29 | *n*-C₈H₁₇ | CF₃ | |
| 30 | *c*-C₃H₅ | CF₃ | |
| 31 | *c*-C₃H₅CH₂ | CF₃ | |
| 32 | *c*-C₄H₇ | CF₃ | |
| 33 | *c*-C₅H₇ | CF₃ | |
| 34 | *c*-C₅H₉ | CF₃ | |
| 35 | CH₂=CH | CF₃ | |
| 36 | CH₃CH=CH | CF₃ | |
| 37 | CH₂=CH(CH₂)₂ | CF₃ | |
| 38 | CH₃O | CF₃ | |
| 39 | C₂H₅O | CF₃ | |
| 40 | *n*-C₃H₇O | CF₃ | |
| 41 | *n*-C₄H₉O | CF₃ | |
| 42 | *n*-C₅H₁₁O | CF₃ | |
| 43 | CH₃ | OCF₃ | |
| 44 | C₂H₅ | OCF₃ | |
| 45 | *n*-C₃H₇ | OCF₃ | |
| 46 | *n*-C₄H₉ | OCF₃ | |
| 47 | *n*-C₅H₁₁ | OCF₃ | |
| 48 | *n*-C₆H₁₃ | OCF₃ | |
| 49 | *n*-C₇H₁₅ | OCF₃ | |
| 50 | *n*-C₈H₁₇ | OCF₃ | |
| 51 | *c*-C₃H₅ | OCF₃ | |
| 52 | *c*-C₃H₅CH₂ | OCF₃ | |
| 53 | *c*-C₄H₇ | OCF₃ | |
| 54 | *c*-C₅H₇ | OCF₃ | |
| 55 | *c*-C₅H₉ | OCF₃ | |
| 56 | CH₂=CH | OCF₃ | |
| 57 | CH₃CH=CH | OCF₃ | |
| 58 | CH₂=CH(CH₂)₂ | OCF₃ | |
| 59 | CH₃O | OCF₃ | |
| 60 | C₂H₅O | OCF₃ | |
| 61 | *n*-C₃H₇O | OCF₃ | |
| 62 | *n*-C₄H₉O | OCF₃ | |
| 63 | *n*-C₅H₁₁O | OCF₃ | |

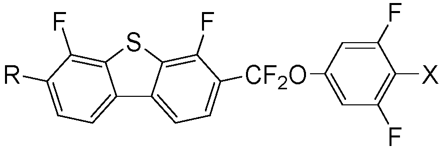

| No: D- | R | X | Phase Range; properties |
|---|---|---|---|
| 1 | CH₃ | F | |
| 2 | C₂H₅ | F | |
| 3 | *n*-C₃H₇ | F | see Synthesis Example 4 |
| 4 | *n*-C₄H₉ | F | |
| 5 | *n*-C₅H₁₁ | F | |
| 6 | *n*-C₆H₁₃ | F | |
| 7 | *n*-C₇H₁₅ | F | |
| 8 | *n*-C₈H₁₇ | F | |
| 9 | *c*-C₃H₅ | F | |
| 10 | *c*-C₃H₅CH₂ | F | |
| 11 | *c*-C₄H₇ | F | |
| 12 | *c*-C₅H₇ | F | |
| 13 | *c*-C₅H₉ | F | |
| 14 | CH₂=CH | F | |
| 15 | CH₃CH=CH | F | |
| 16 | CH₂=CH(CH₂)₂ | F | |
| 17 | CH₃O | F | |
| 18 | C₂H₅O | F | see Synthesis Example 2 |
| 19 | *n*-C₃H₇O | F | |
| 20 | *n*-C₄H₉O | F | see Synthesis Example 3 |
| 21 | *n*-C₅H₁₁O | F | |
| 22 | CH₃ | CF₃ | |
| 23 | C₂H₅ | CF₃ | |
| 24 | *n*-C₃H₇ | CF₃ | see Synthesis Example 6 |
| 25 | *n*-C₄H₉ | CF₃ | |
| 26 | *n*-C₅H₁₁ | CF₃ | |
| 27 | *n*-C₆H₁₃ | CF₃ | |
| 28 | *n*-C₇H₁₅ | CF₃ | |
| 29 | *n*-C₈H₁₇ | CF₃ | |
| 30 | *c*-C₃H₅ | CF₃ | |
| 31 | *c*-C₃H₅CH₂ | CF₃ | |
| 32 | *c*-C₄H₇ | CF₃ | |
| 33 | *c*-C₅H₇ | CF₃ | |
| 34 | *c*-C₅H₉ | CF₃ | |
| 35 | CH₂=CH | CF₃ | |
| 36 | CH₃CH=CH | CF₃ | |
| 37 | CH₂=CH(CH₂)₂ | CF₃ | |
| 38 | CH₃O | CF₃ | |
| 39 | C₂H₅O | CF₃ | |
| 40 | *n*-C₃H₇O | CF₃ | |
| 41 | *n*-C₄H₉O | CF₃ | |
| 42 | *n*-C₅H₁₁O | CF₃ | |
| 43 | CH₃ | OCF₃ | |
| 44 | C₂H₅ | OCF₃ | |
| 45 | *n*-C₃H₇ | OCF₃ | see Synthesis Example 5 |
| 46 | *n*-C₄H₉ | OCF₃ | |
| 47 | *n*-C₅H₁₁ | OCF₃ | |
| 48 | *n*-C₆H₁₃ | OCF₃ | |
| 49 | *n*-C₇H₁₅ | OCF₃ | |
| 50 | *n*-C₈H₁₇ | OCF₃ | |
| 51 | *c*-C₃H₅ | OCF₃ | |
| 52 | *c*-C₃H₅CH₂ | OCF₃ | |
| 53 | *c*-C₄H₇ | OCF₃ | |
| 54 | *c*-C₅H₇ | OCF₃ | |
| 55 | *c*-C₅H₉ | OCF₃ | |
| 56 | CH₂=CH | OCF₃ | |
| 57 | CH₃CH=CH | OCF₃ | |
| 58 | CH₂=CH(CH₂)₂ | OCF₃ | |
| 59 | CH₃O | OCF₃ | |
| 60 | C₂H₅O | OCF₃ | |
| 61 | *n*-C₃H₇O | OCF₃ | |
| 62 | *n*-C₄H₉O | OCF₃ | |
| 63 | *n*-C₅H₁₁O | OCF₃ | |

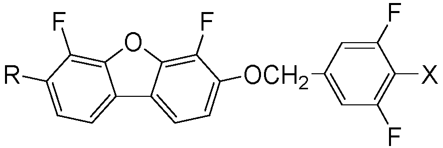

| No: E- | R | X | Phase Range; properties |
|---|---|---|---|
| 1 | CH₃ | F | |
| 2 | C₂H₅ | F | |
| 3 | *n*-C₃H₇ | F | |
| 4 | *n*-C₄H₉ | F | |
| 5 | *n*-C₅H₁₁ | F | |
| 6 | *n*-C₆H₁₃ | F | |
| 7 | *n*-C₇H₁₅ | F | |
| 8 | *n*-C₈H₁₇ | F | |
| 9 | *c*-C₃H₅ | F | |
| 10 | *c*-C₃H₅CH₂ | F | |
| 11 | *c*-C₄H₇ | F | |
| 12 | *c*-C₅H₇ | F | |
| 13 | *c*-C₅H₉ | F | |
| 14 | CH₂=CH | F | |
| 15 | CH₃CH=CH | F | |
| 16 | CH₂=CH(CH₂)₂ | F | |
| 17 | CH₃O | F | |
| 18 | C₂H₅O | F | see Synthesis Example 7 |
| 19 | *n*-C₃H₇O | F | |
| 20 | *n*-C₄H₉O | F | |
| 21 | *n*-C₅H₁₁O | F | |
| 22 | CH₃ | CF₃ | |
| 23 | C₂H₅ | CF₃ | |
| 24 | *n*-C₃H₇ | CF₃ | |
| 25 | *n*-C₄H₉ | CF₃ | |
| 26 | *n*-C₅H₁₁ | CF₃ | |
| 27 | *n*-C₆H₁₃ | CF₃ | |
| 28 | *n*-C₇H₁₅ | CF₃ | |
| 29 | *n*-C₈H₁₇ | CF₃ | |
| 30 | *c*-C₃H₅ | CF₃ | |
| 31 | *c*-C₃H₅CH₂ | CF₃ | |
| 32 | *c*-C₄H₇ | CF₃ | |
| 33 | *c*-C₅H₇ | CF₃ | |
| 34 | *c*-C₅H₉ | CF₃ | |
| 35 | CH₂=CH | CF₃ | |
| 36 | CH₃CH=CH | CF₃ | |
| 37 | CH₂=CH(CH₂)₂ | CF₃ | |
| 38 | CH₃O | CF₃ | |
| 39 | C₂H₅O | CF₃ | |
| 40 | *n*-C₃H₇O | CF₃ | |
| 41 | *n*-C₄H₉O | CF₃ | |
| 42 | *n*-C₅H₁₁O | CF₃ | |
| 43 | CH₃ | OCF₃ | |
| 44 | C₂H₅ | OCF₃ | |
| 45 | *n*-C₃H₇ | OCF₃ | |
| 46 | *n*-C₄H₉ | OCF₃ | |
| 47 | *n*-C₅H₁₁ | OCF₃ | |
| 48 | *n*-C₆H₁₃ | OCF₃ | |
| 49 | *n*-C₇H₁₅ | OCF₃ | |
| 50 | *n*-C₈H₁₇ | OCF₃ | |
| 51 | *c*-C₃H₅ | OCF₃ | |
| 52 | *c*-C₃H₅CH₂ | OCF₃ | |
| 53 | *c*-C₄H₇ | OCF₃ | |
| 54 | *c*-C₅H₇ | OCF₃ | |
| 55 | *c*-C₅H₉ | OCF₃ | |
| 56 | CH₂=CH | OCF₃ | |
| 57 | CH₃CH=CH | OCF₃ | |
| 58 | CH₂=CH(CH₂)₂ | OCF₃ | |
| 59 | CH₃O | OCF₃ | |
| 60 | C₂H₅O | OCF₃ | |
| 61 | *n*-C₃H₇O | OCF₃ | |
| 62 | *n*-C₄H₉O | OCF₃ | |
| 63 | *n*-C₅H₁₁O | OCF₃ | |

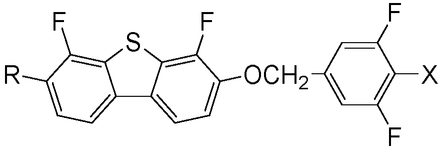

| No: E- | R | X | Phase Range; properties |
|---|---|---|---|
| 1 | CH₃ | F | |
| 2 | C₂H₅ | F | |
| 3 | *n*-C₃H₇ | F | |
| 4 | *n*-C₄H₉ | F | |
| 5 | *n*-C₅H₁₁ | F | |
| 6 | *n*-C₆H₁₃ | F | |
| 7 | *n*-C₇H₁₅ | F | |
| 8 | *n*-C₈H₁₇ | F | |
| 9 | *c*-C₃H₅ | F | |
| 10 | *c*-C₃H₅CH₂ | F | |
| 11 | *c*-C₄H₇ | F | |
| 12 | *c*-C₅H₇ | F | |
| 13 | *c*-C₅H₉ | F | |
| 14 | CH₂=CH | F | |
| 15 | CH₃CH=CH | F | |
| 16 | CH₂=CH(CH₂)₂ | F | |
| 17 | CH₃O | F | |
| 18 | C₂H₅O | F | see Synthesis Example 8 |
| 19 | *n*-C₃H₇O | F | |
| 20 | *n*-C₄H₉O | F | |
| 21 | *n*-C₅H₁₁O | F | |
| 22 | CH₃ | CF₃ | |
| 23 | C₂H₅ | CF₃ | |
| 24 | *n*-C₃H₇ | CF₃ | |
| 25 | *n*-C₄H₉ | CF₃ | |
| 26 | *n*-C₅H₁₁ | CF₃ | |
| 27 | *n*-C₆H₁₃ | CF₃ | |
| 28 | *n*-C₇H₁₅ | CF₃ | |
| 29 | *n*-C₈H₁₇ | CF₃ | |
| 30 | *c*-C₃H₅ | CF₃ | |
| 31 | *c*-C₃H₅CH₂ | CF₃ | |
| 32 | *c*-C₄H₇ | CF₃ | |
| 33 | *c*-C₅H₇ | CF₃ | |
| 34 | *c*-C₅H₉ | CF₃ | |
| 35 | CH₂=CH | CF₃ | |
| 36 | CH₃CH=CH | CF₃ | |
| 37 | CH₂=CH(CH₂)₂ | CF₃ | |
| 38 | CH₃O | CF₃ | |
| 39 | C₂H₅O | CF₃ | |
| 40 | *n*-C₃H₇O | CF₃ | |
| 41 | *n*-C₄H₉O | CF₃ | |
| 42 | *n*-C₅H₁₁O | CF₃ | |
| 43 | CH₃ | OCF₃ | |
| 44 | C₂H₅ | OCF₃ | |
| 45 | *n*-C₃H₇ | OCF₃ | |
| 46 | *n*-C₄H₉ | OCF₃ | |
| 47 | *n*-C₅H₁₁ | OCF₃ | |
| 48 | *n*-C₆H₁₃ | OCF₃ | |
| 49 | *n*-C₇H₁₅ | OCF₃ | |
| 50 | *n*-C₈H₁₇ | OCF₃ | |
| 51 | *c*-C₃H₅ | OCF₃ | |
| 52 | *c*-C₃H₅CH₂ | OCF₃ | |
| 53 | *c*-C₄H₇ | OCF₃ | |
| 54 | *c*-C₅H₇ | OCF₃ | |
| 55 | *c*-C₅H₉ | OCF₃ | |
| 56 | CH₂=CH | OCF₃ | |
| 57 | CH₃CH=CH | OCF₃ | |
| 58 | CH₂=CH(CH₂)₂ | OCF₃ | |
| 59 | CH₃O | OCF₃ | |
| 60 | C₂H₅O | OCF₃ | |
| 61 | *n*-C₃H₇O | OCF₃ | |
| 62 | *n*-C₄H₉O | OCF₃ | |
| 63 | *n*-C₅H₁₁O | OCF₃ | |

### Use Examples

Liquid crystalline media using the compounds according to the invention as a component are prepared in the following. Unless indicated otherwise, percentages are % by weight. Stabilizers according to table F are optionally added to the mixtures presented below.

A nematic liquid-crystal mixture N-1 having the composition and properties as indicated in the following table is used as the basis (host mixture) for preparation of several of the exemplary mixtures.

### Mixture N-1:

| | | | |
|---|---|---|---|
| APUQU-2-F | 5.0 % | Clearing point [°C]: | 78.5 |
| CC-3-V | 31.5 % | Δn [589 nm, 20°C]: | 0.100 |
| CC-3-V1 | 6.5 % | nₑ [589 nm, 20°C]: | 1.588 |
| CCP-3-3 | 6.0 % | nₒ [589 nm, 20°C]: | 1.488 |
| CCP-V-1 | 12.0 % | Δε [1 kHz, 20°C]: | 6.0 |
| CCP-V2-1 | 12.0 % | ε_{∥} [1 kHz, 20°C]: | 9.0 |
| CPGP-5-2 | 2.0 % | ε_{⊥} [1 kHz, 20°C]: | 3.0 |
| PP-1-2V1 | 5.0 % | γ₁ [mPa s, 20°C]: | 64 |
| PUQU-3-F | 20.0 % | K₁ [pN, 20°C]: | 13.3 |
| Σ | 100.0 % | K₃ [pN, 20°C]: | 15.5 |
| | | V₀ [V, 20 °C] | 1.58 |

The host mixture N-1 is optionally stabilized with 0.05 % of one of the compounds of Table F above.

### Mixture Example 1

A nematic liquid-crystal medium M-1 consisting of 97.5% of the medium N-1 and 2.5% of the compound B(S)QU-2O-F of Synthesis Example 2 has the following properties:

| | | | |
|---|---|---|---|
| Host mixture N-1 | 97.5 % | Clearing point [°C]: | 79 |
| B(S)QU-2O-F | 2.5 % | Δn [589 nm, 20°C]: | 0.102 |
| Σ | 100.0 % | nₑ [589 nm, 20°C]: | 1.590 |
| | | nₒ [589 nm, 20°C]: | 1.487 |
| | | Δε [1 kHz, 20°C]: | 6.3 |
| | | ε_{∥} [1 kHz, 20°C]: | 9.5 |
| | | ε_{⊥} [1 kHz, 20°C]: | 3.2 |
| | | γ₁ [mPa s, 20°C]: | 68 |
| | | K₁ [pN, 20°C]: | 13.5 |
| | | K₃ [pN, 20°C]: | 15.4 |

The compound B(S)QU-2O-F is well soluble in the medium N-1 and increases ε_{⊥} and the resulting transmission.

### Mixture Example 2

A nematic liquid-crystal medium M-2 consisting of 97.5% of the medium N-1 and 2.5% of the compound B(S)QU-4O-F of Synthesis Example 3 has the following properties:

| | | | |
|---|---|---|---|
| Host mixture N-1 | 97.5 % | Clearing point [°C]: | 79 |
| B(S)QU-4O-F | 2.5 % | Δn [589 nm, 20°C]: | 0.102 |
| Σ | 100.0 % | nₑ [589 nm, 20°C]: | 1.590 |
| | | nₒ [589 nm, 20°C]: | 1.487 |
| | | Δε [1 kHz, 20°C]: | 6.3 |
| | | ε_{∥} [1 kHz, 20°C]: | 9.5 |
| | | ε_{⊥} [1 kHz, 20°C]: | 3.2 |
| | | γ₁ [mPa s, 20°C]: | |
| | | K₁ [pN, 20°C]: | 13.6 |
| | | K₃ [pN, 20°C]: | 15.1 |

The compound is well soluble in the medium N-1. The mixture has an increased value of Δε_{⊥} an advantageously high clearing point.

### Mixture Example 3

A nematic liquid-crystal medium M-3 consisting of 95% of the medium N-1 and 5% of the compound B(S)QU-3-F of Synthesis Example 4 has the following properties:

| | | | |
|---|---|---|---|
| Host mixture N-1 | 95.0 % | Clearing point [°C]: | 77.5 |
| B(S)QU-3-F | 5.0 % | Δn [589 nm, 20°C]: | 0.104 |
| Σ | 100.0 % | nₑ [589 nm, 20°C]: | 1.592 |
| | | nₒ [589 nm, 20°C]: | 1.488 |
| | | Δε [1 kHz, 20°C]: | 6.5 |
| | | ε_{∥} [1 kHz, 20°C]: | 9.8 |
| | | ε_{⊥} [1 kHz, 20°C]: | 3.3 |
| | | γ₁ [mPa s, 20°C]: | |
| | | K₁ [pN, 20°C]: | 13.6 |
| | | K₃ [pN, 20°C]: | 15.1 |
| | | V₀ [V, 20 °C] | 1.50 |

The compound B(S)QU-3-F is well soluble in the medium N-1 and increases ε_{⊥} and the resulting transmission.

### Mixture Example 4

A nematic liquid-crystal medium M-4 consisting of 97.5% of the medium N-1 and 2.5% of the compound B(S)QU-3-OT of Synthesis Example 5 has the following properties:

| | | | |
|---|---|---|---|
| MDA-14-2434 | 97.5 % | Clearing point [°C]: | 78 |
| B(S)QU-3-OT | 2.5 % | Δn [589 nm, 20°C]: | 0.102 |
| Σ | 100.0 % | nₑ [589 nm, 20°C]: | 1.589 |
| | | nₒ [589 nm, 20°C]: | 1.487 |
| | | Δε [1 kHz, 20°C]: | 6.3 |
| | | ε_{∥} [1 kHz, 20°C]: | 9.4 |
| | | ε_{⊥} [1 kHz, 20°C]: | 3.2 |
| | | γ₁ [mPa s, 20°C]: | |
| | | K₁ [pN, 20°C]: | 13.3 |
| | | K₃ [pN, 20°C]: | 15.1 |
| | | V₀ [V, 20 °C] | 1.54 |

The compound B(S)QU-3-OT is well soluble in the medium N-1 and increases ε_{⊥} and the resulting transmission.

## Claims

1. A compound of formula I 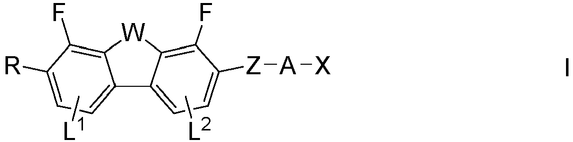 in which
W denotes O or S,
R denotes H, an alkyl radical having 1 to 15 C atoms, wherein one or more CH₂ groups in these radicals may each be replaced, independently of one another, by -C≡C- , -CF₂O-, -OCF₂-, -CH=CH-, 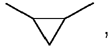 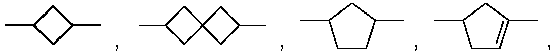 -O-, -CO-O- or -O-CO- in such a way that O atoms are not linked directly to one another, and in which one or more H atoms may be replaced by halogen,
A wherein W is O, A denotes a 1,4-phenylene in which one or more H atoms may be replaced by F or CH₃, wherein W is S, A denotes 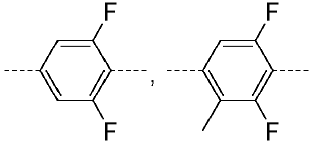 or 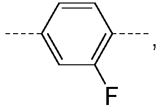
Z denotes -CF₂O-, -C(O)O-, -OC(O)-, -CH₂O- or -OCH₂-, and
X denotes F, Cl, CN, NCS, fluorinated alkyl, fluorinated alkoxy, fluorinated alkenyl or fluorinated alkenyloxy, each having up to 5 C atoms, and
L¹, L² independently denote H or -CH₃.

2. The compound according to claim 1, wherein X denotes F, CF₃, OCF₃, CHF₂ or OCHF₂.

3. The compound according to claim 1 or 2, wherein ring A denotes

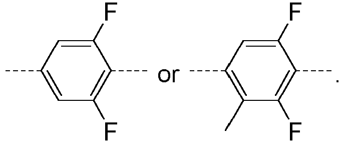

4. The compound according to one or more of claims 1 to 3, wherein W denotes O.

5. The compound according to one or more of claims 1 to 3, wherein W denotes S.

6. The compound according to one or more of claims 1 to 5 selected from the following sub-formulae: 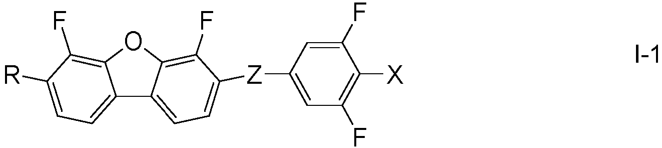 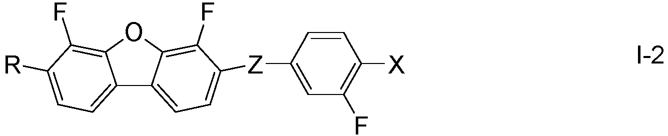 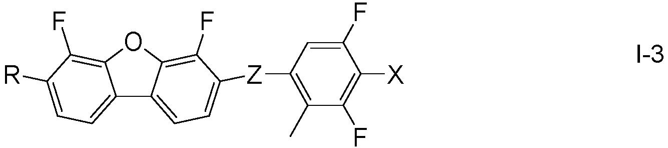 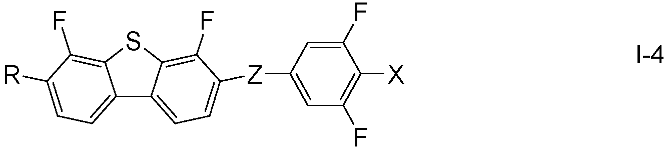 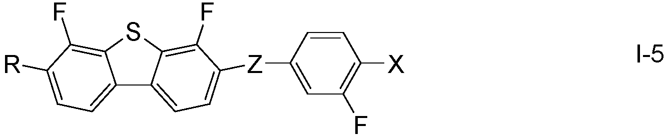 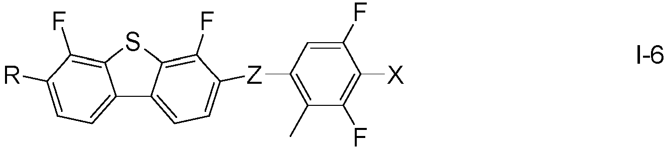 in which R, Z and X have the meanings given in claim 1.

7. The compound according to one or more of claims 1 to 6 selected from the following formulae I-A to I-K 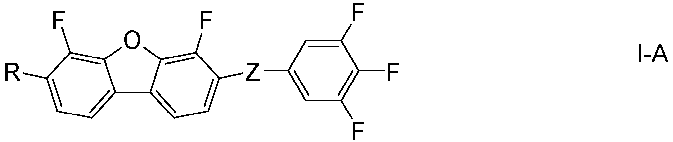 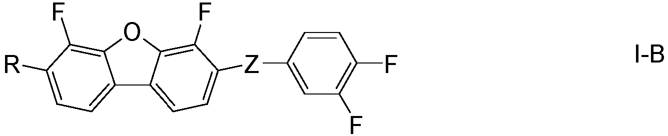 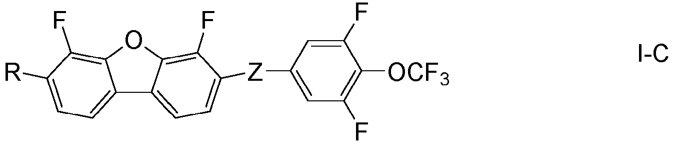 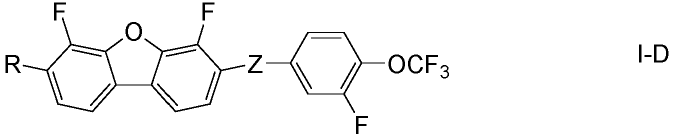 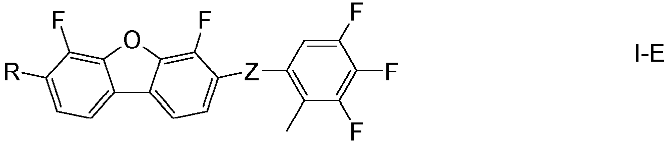 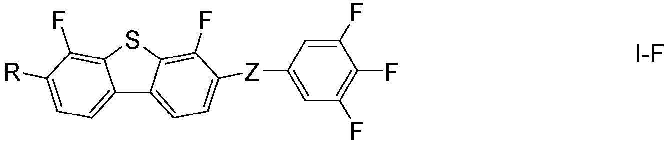 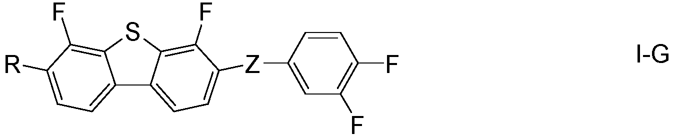 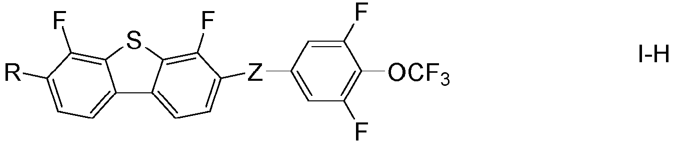 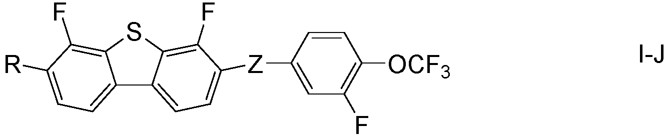 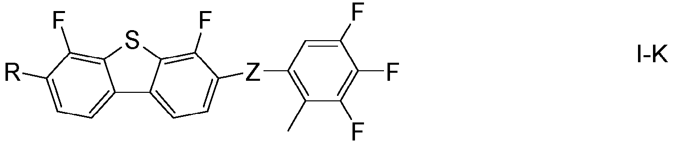 in which R and Z are defined as in claim 1.

8. The compound according to one or more of claims 1 to 7, wherein Z denotes -CF₂O-, -C(O)O- or -CH₂O-.

9. The compound according to one or more of claims 1 to 8, wherein ring A denotes

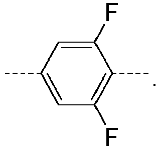

10. Use of a compound according to one or more of claims 1 to 9 in liquid-crystalline media or for energy-saving displays.

11. A liquid-crystalline medium comprising one or more compounds of formula I according to one or more of claims 1 to 9.

12. A liquid-crystalline medium according to claim 11, comprising one or more compounds selected from the group of compounds of formulae II and III: 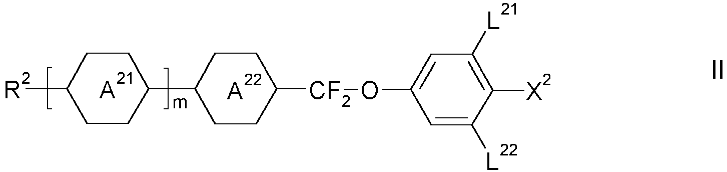 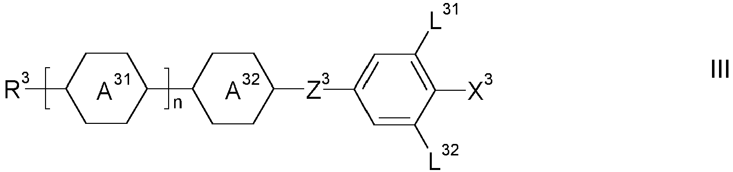 in which
R² denotes alkyl, alkoxy, fluorinated alkyl or fluorinated alkoxy having 1 to 7 C atoms, alkenyl, alkenyloxy, alkoxyalkyl or fluorinated alkenyl having 2 to 7 C atoms and preferably alkyl or alkenyl, wherein one or more CH₂ groups in these radicals may each be replaced, independently of one another, by 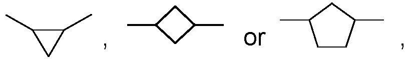 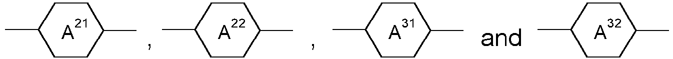 on each appearance, independently of one another, denote 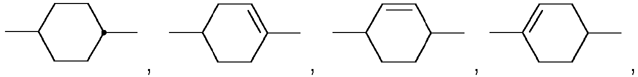 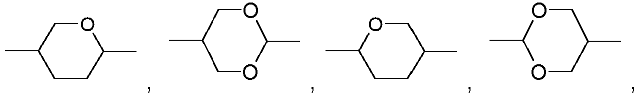 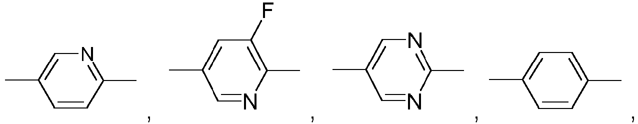 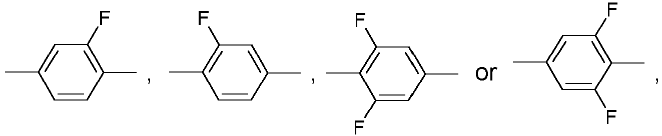
L²¹ and L²² denote H or F,
X² denotes halogen, halogenated alkyl or alkoxy having 1 to 3 C atoms or halogenated alkenyl or alkenyloxy having 2 or 3 C atoms,
m is 0, 1, 2 or 3,
R³ denotes alkyl, alkoxy, fluorinated alkyl or fluorinated alkoxy having 1 to 7 C atoms, alkenyl, alkenyloxy, alkoxyalkyl or fluorinated alkenyl having 2 to 7 C atoms, wherein one or more CH₂ groups in these radicals may each be replaced, independently of one another, by 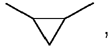 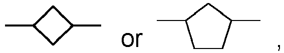
L³¹ and L³² independently of one another, denote H or F,
X³ denotes halogen, halogenated alkyl or alkoxy having 1 to 3 C atoms or halogenated alkenyl or alkenyloxy having 2 or 3 C atoms,
Z³ denotes -CH₂CH₂-, -CF₂CF₂-, -COO-, *trans*-CH=CH-, trans-CF=CF-, -CH₂O- or a single bond, and
n is 0, 1, 2 or 3.

13. Process for the preparation of a liquid-crystalline medium by mixing one or more compounds of formula I according to one or more of claims 1 to 9 with one or more low-molecular-weight liquid-crystalline compounds or a liquid-crystal mixture and optionally with further liquid-crystalline compounds and/or additives.

14. Electro-optical display element containing a liquid-crystalline medium according to claim 11 or 12.

## Patentansprüche

1. Verbindung der Formel I 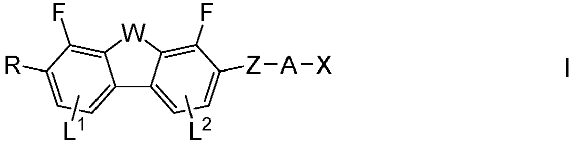 worin
W O oder S bedeutet,
R H, einen Alkylrest mit 1 bis 15 C-Atomen bedeutet, bei dem in diesen Resten eine oder mehrere CH₂-Gruppen jeweils unabhängig voneinander so durch -C≡C-, -CF₂O-, -OCF₂-, -CH=CH-, 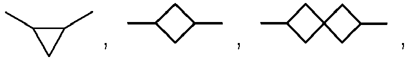 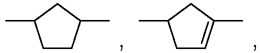 -O-, -CO-O- oder -O-CO- ersetzt sein können, dass O-Atome nicht direkt miteinander verknüpft sind, und worin ein oder mehrere H-Atome durch Halogen ersetzt sein können,
A wenn W O ist, A ein 1,4-Phenylen bedeutet, worin ein oder mehrere H-Atome durch F oder CH₃ ersetzt sein können, wenn W S ist, A 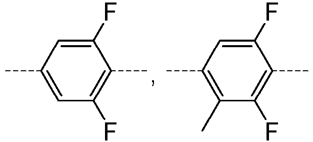 oder bedeutet, 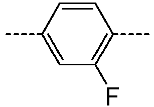
Z -CF₂O-, -C(O)O-, -OC(O)-, -CH₂O- oder -OCH₂- bedeutet, und
X F, Cl, CN, NCS, fluoriertes Alkyl, fluoriertes Alkoxy, fluoriertes Alkenyl oder fluoriertes Alkenyloxy mit jeweils bis zu 5 C-Atomen bedeutet, und
L¹, L² unabhängig H oder -CH₃ bedeuten.

2. Verbindung nach Anspruch 1, bei der X F, CF₃, OCF₃, CHF₂ oder OCHF₂ bedeutet.

3. Verbindung nach Anspruch 1 oder 2, bei der der Ring A 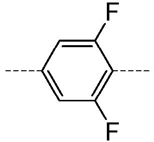 oder 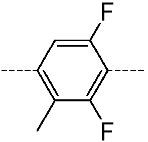 bedeutet.

4. Verbindung nach einem oder mehreren der Ansprüche 1 bis 3, bei der W O bedeutet.

5. Verbindung nach einem oder mehreren der Ansprüche 1 bis 3, bei der W S bedeutet.

6. Verbindung nach einem oder mehreren der Ansprüche 1 bis 5, ausgewählt aus den folgenden Unterformeln: 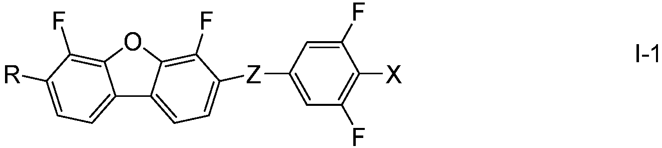 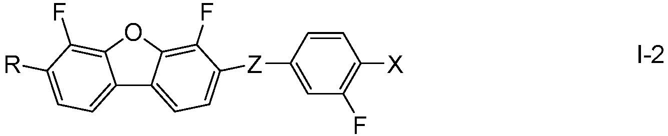 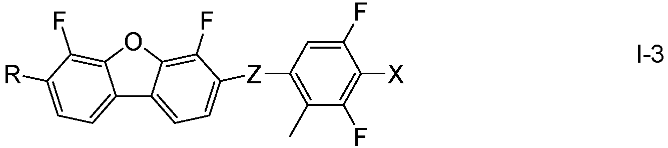 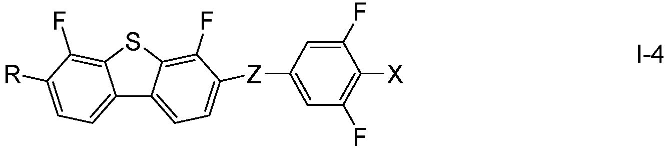 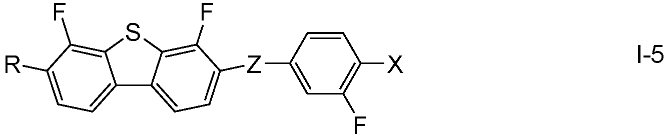 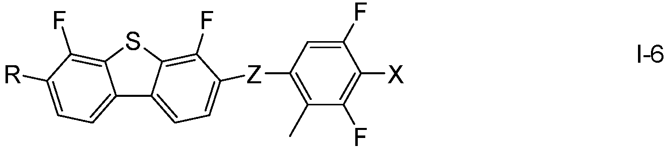 worin R, Z und X die in Anspruch 1 genannten Bedeutungen besitzen.

7. Verbindung nach einem oder mehreren der Ansprüche 1 bis 6, ausgewählt aus den folgenden Formeln I-A bis I-K, 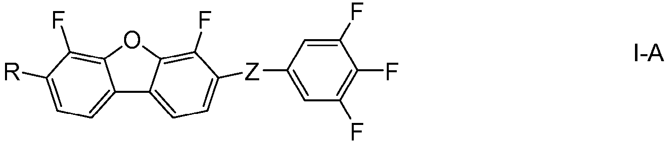 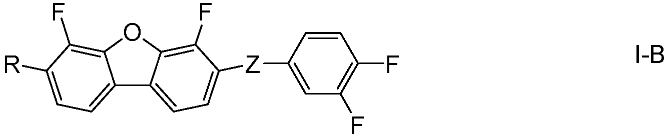 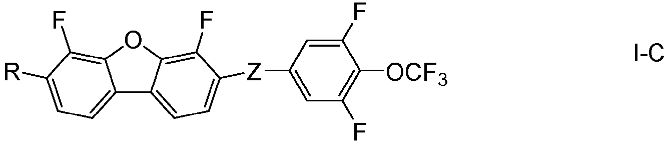 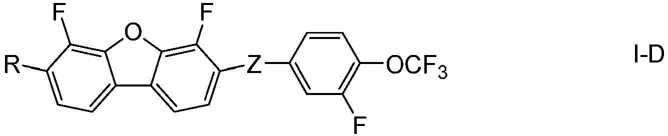 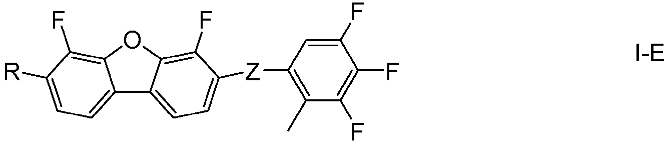 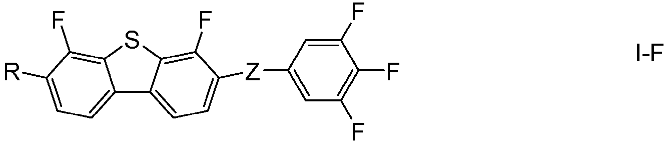 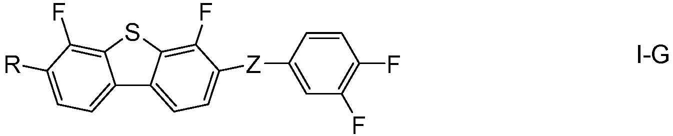 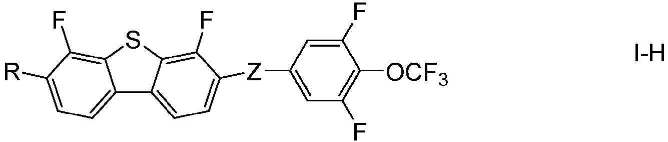 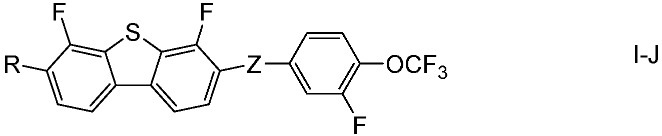 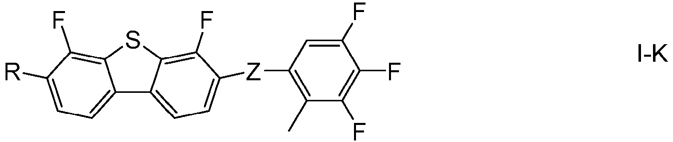 worin R und Z wie in Anspruch 1 definiert sind.

8. Verbindung nach einem oder mehreren der Ansprüche 1 bis 7, bei der Z -CF₂O-, -C(O)O- oder -CH₂O- bedeutet.

9. Verbindung nach einem oder mehreren der Ansprüche 1 bis 8, bei der der Ring A 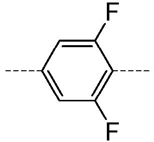 bedeutet.

10. Verwendung einer Verbindung nach einem oder mehreren der Ansprüche 1 bis 9 in flüssigkristallinen Medien oder für energiesparende Anzeigen.

11. Flüssigkristallines Medium enthaltend eine oder mehrere Verbindungen der Formel I nach einem oder mehreren der Ansprüche 1 bis 9.

12. Flüssigkristallines Medium nach Anspruch 11, enthaltend eine oder mehrere Verbindungen, die ausgewählt sind aus der Gruppe der Verbindungen der Formeln II und III: 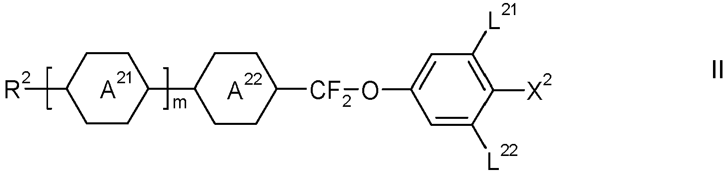 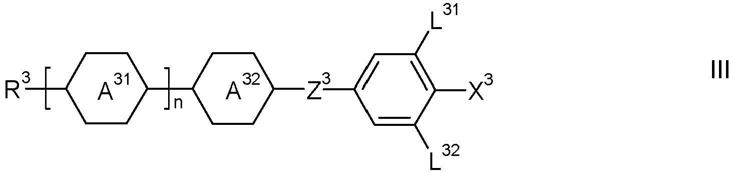 worin
R² Alkyl, Alkoxy, fluoriertes Alkyl oder fluoriertes Alkoxy mit 1 bis 7 C-Atomen, Alkenyl, Alkenyloxy, Alkoxyalkyl oder fluoriertes Alkenyl mit 2 bis 7 C-Atomen und vorzugsweise Alkyl oder Alkenyl bedeutet, bei denen in diesen Resten eine oder mehrere CH₂-Gruppen jeweils unabhängig voneinander durch 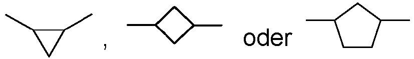 ersetzt sein können, 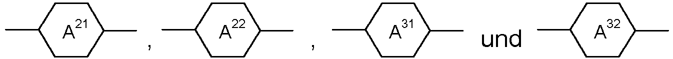 bei jedem Auftreten unabhängig voneinander 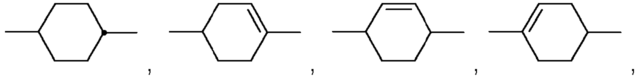 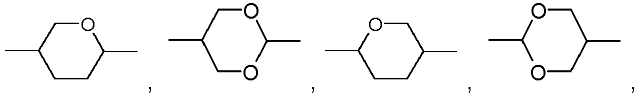 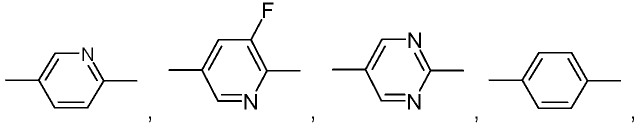 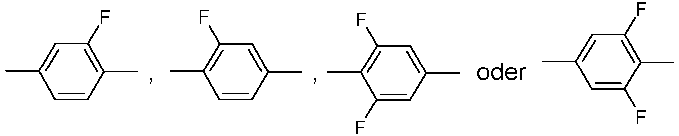 bedeuten
L²¹ und L²² H oder F bedeuten,
X² Halogen, halogeniertes Alkyl oder Alkoxy mit 1 bis 3 C-Atomen oder halogeniertes Alkenyl oder Alkenyloxy mit 2 oder 3 C-Atomen bedeutet,
m 0, 1, 2 oder 3 ist,
R³ Alkyl, Alkoxy, fluoriertes Alkyl oder fluoriertes Alkoxy mit 1 bis 7 C-Atomen, Alkenyl, Alkenyloxy, Alkoxyalkyl oder fluoriertes Alkenyl mit 2 bis 7 C-Atomen bedeutet, bei denen in diesen Resten eine oder mehrere CH₂-Gruppen jeweils unabhängig voneinander durch 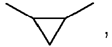 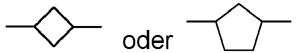 ersetzt sein können,
L³¹ und L³² unabhängig voneinander H oder F bedeuten,
X³ Halogen, halogeniertes Alkyl oder Alkoxy mit 1 bis 3 C-Atomen oder halogeniertes Alkenyl oder Alkenyloxy mit 2 oder 3 C-Atomen bedeutet,
Z³ -CH₂CH₂-, -CF₂CF₂-, -COO-, *trans*-CH=CH-, trans-CF=CF-, -CH₂O- oder eine Einfachbindung bedeutet, und
n 0, 1, 2 oder 3 ist.

13. Verfahren zur Herstellung eines flüssigkristallinen Mediums durch Mischen von einer oder mehreren Verbindungen der Formel I nach einem oder mehreren der Ansprüche 1 oder 9 mit einer oder mehreren niedermolekularen flüssigkristallinen Verbindungen oder einer Flüssigkristallmischung und gegebenenfalls mit weiteren flüssigkristallinen Verbindungen und/oder Zusatzstoffen.

14. Elektrooptisches Anzeigeelement enthaltend ein flüssigkristallines Medium nach Anspruch 11 oder 12.

## Revendications

1. Composé de formule I 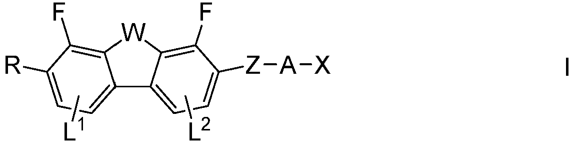 dans laquelle
W désigne O ou S
R désigne H, un radical alkyle ayant de 1 à 15 atomes de C, où un ou plusieurs groupements CH₂ dans ces radicaux peuvent chacun être remplacés, indépendamment les uns des autres, par -C≡C-, -CF₂O-, -OCF₂-, -CH=CH-, 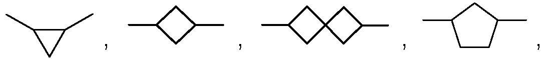 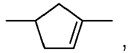 -O-, -CO-O- ou -O-CO- de telle sorte que les atomes de O ne soient pas liés directement les uns aux autres, et où un ou plusieurs atomes de H peuvent être remplacés par halogène,
A lorsque W est O, A désigne 1,4-phénylène où un ou plusieurs atomes de H peuvent être remplacés par F ou CH₃, lorsque W est S, A désigne 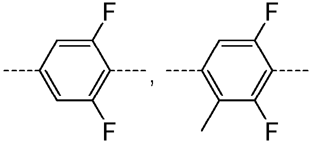 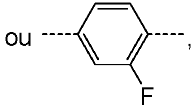
Z désigne -CF₂O-, -C(O)O-, -OC(O)-, -CH₂O- ou -OCH₂-, et
X désigne F, Cl, CN, NCS, alkyle fluoré, alcoxy fluoré, alcényle fluoré ou alcényloxy fluoré, ayant chacun jusqu'à 5 atomes de C, et
L¹, L² désignent indépendamment H ou -CH₃.

2. Composé selon la revendication 1, dans lequel X désigne F, CF₃, OCF₃, CHF₂ ou OCHF₂.

3. Composé selon la revendication 1 ou 2, dans lequel le cycle A désigne

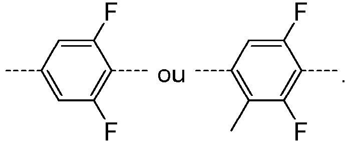

4. Composé selon l'une ou plusieurs parmi les revendications 1 à 3, dans lequel W désigne O.

5. Composé selon l'une ou plusieurs parmi les revendications 1 à 3, dans lequel W désigne S.

6. Composé selon l'une ou plusieurs parmi les revendications 1 à 5, choisi parmi les sous-formules suivantes : 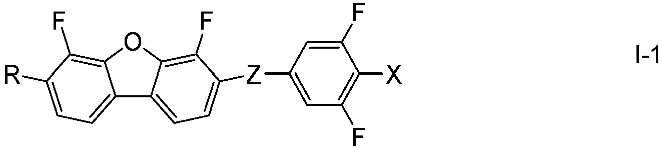 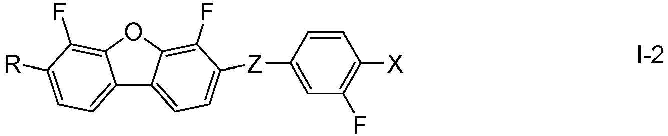 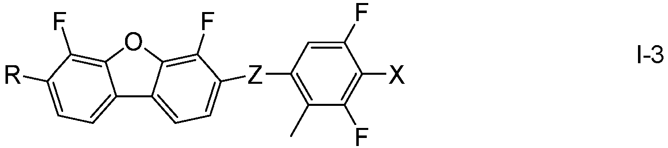 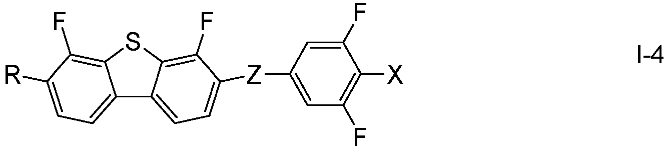 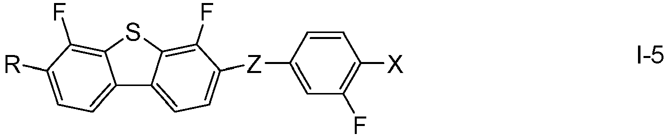 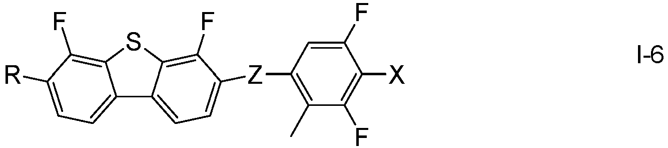 dans lesquelles R, Z et X revêtent les significations données selon la revendication 1.

7. Composé selon l'une ou plusieurs parmi les revendications 1 à 6, choisi parmi les formules I-A à I-K suivantes 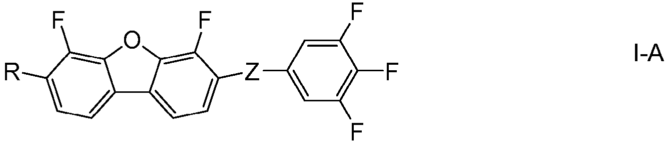 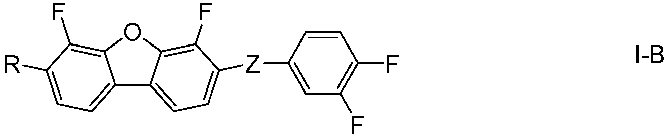 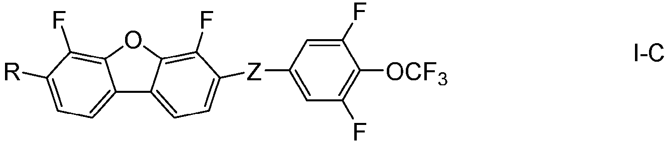 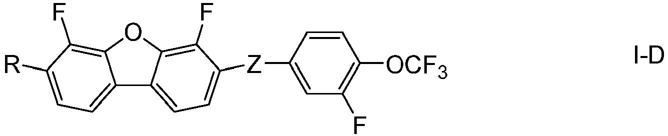 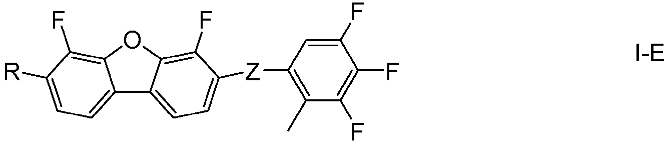 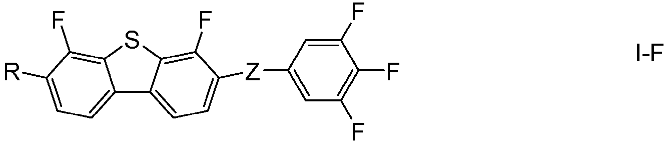 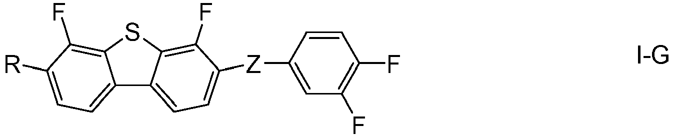 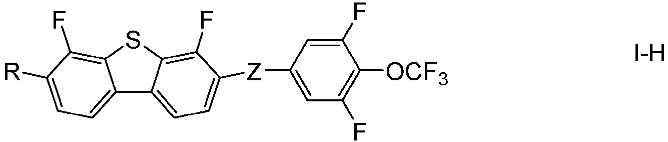 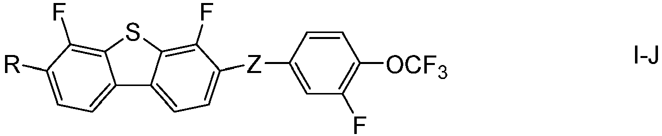 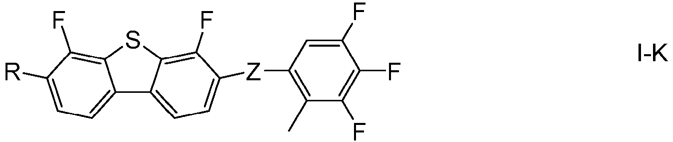 dans lesquelles R et Z sont tels que définis selon la revendication 1.

8. Composé selon l'une ou plusieurs parmi les revendications 1 à 7, dans lequel Z désigne -CF₂O-, -C(O)O- ou -CH₂O-.

9. Composé selon l'une ou plusieurs parmi les revendications 1 à 8, dans lequel le cycle A désigne

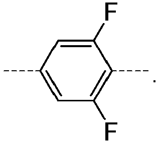

10. Utilisation d'un composé selon l'une ou plusieurs parmi les revendications 1 à 9, dans des milieux cristallins liquides ou pour des affichages à faible consommation d'énergie.

11. Milieu cristallin liquide comprenant un ou plusieurs composés de formule I selon l'une ou plusieurs parmi les revendications 1 à 9.

12. Milieu cristallin liquide selon la revendication 11, comprenant un ou plusieurs composés choisis dans le groupe constitué par les composés de formules II et III : 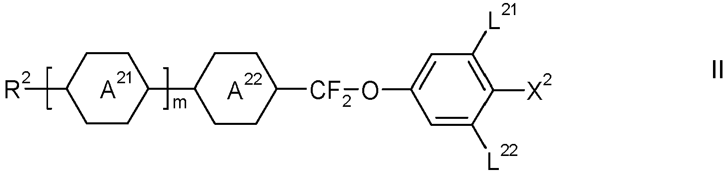 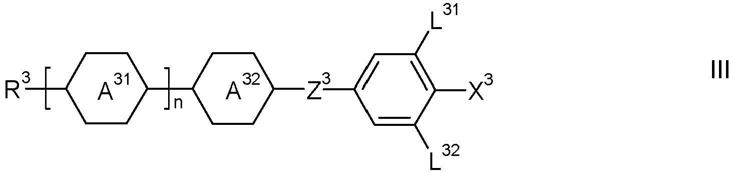 dans lesquelles
R² désigne alkyle, alcoxy, alkyle fluoré ou alcoxy fluoré ayant de 1 à 7 atomes de C, alcényle, alcényloxy, alcoxyalkyle, ou alcényle fluoré ayant de 2 à 7 atomes de C et préférablement alkyle ou alcényle, où un ou plusieurs groupements CH₂ dans ces radicaux peuvent chacun être remplacés, indépendamment les uns des autres, par 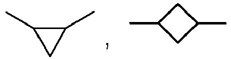 ou 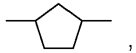 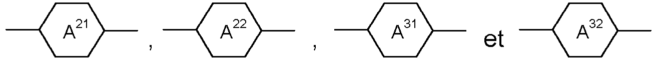 à chaque occurrence, indépendamment les uns des autres, désignent 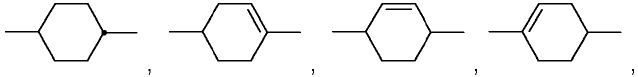 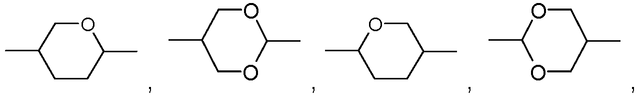 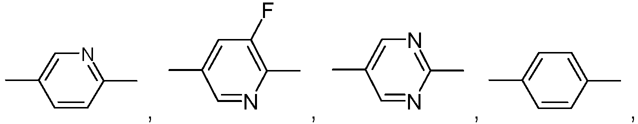 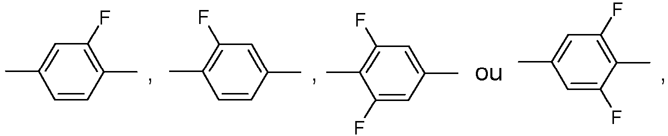
L²¹ et L²² désignent H ou F,
X² désigne halogène, alkyle ou alcoxy halogéné ayant de 1 à 3 atomes de C ou alcényle ou alcényloxy halogéné ayant 2 ou 3 atomes de C,
m vaut 0, 1, 2 ou 3,
R³ désigne alkyle, alcoxy, alkyle fluoré ou alcoxy fluoré ayant de 1 à 7 atomes de C, alcényle, alcényloxy, alcoxyalkyle, ou alcényle fluoré ayant de 2 à 7 atomes de C, où un ou plusieurs groupements CH₂ dans ces radicaux peuvent chacun être remplacés, indépendamment les uns des autres, par 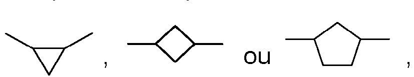
L³¹ et L³² indépendamment l'un de l'autre, désignent H ou F,
X³ désigne halogène, alkyle ou alcoxy halogéné ayant de 1 à 3 atomes de C ou alcényle ou alcényloxy halogéné ayant 2 ou 3 atomes de C,
Z³ désigne -CH₂CH₂-, -CF₂CF₂-, -COO-, *trans*-CH=CH-, trans-CF=CF-, -CH₂O- ou une liaison simple, et
n vaut 0, 1, 2 ou 3.

13. Procédé de préparation d'un milieu cristallin liquide, par le mélange d'un ou plusieurs composés de formule I selon l'une ou plusieurs parmi les revendications 1 à 9 avec un ou plusieurs composés cristallins liquides de bas poids moléculaire ou un mélange cristallin liquide et éventuellement avec d'autres composés cristallins liquides et/ou additifs.

14. Elément d'affichage électro-optique contenant un milieu cristallin liquide selon la revendication 11 ou 12.
